Europäisches Patentamt

European Patent Office

Office européen des brevets

(19)

(11) Veröffentlichungsnummer: **0 166 437**
A2

(12) **EUROPÄISCHE PATENTANMELDUNG**

(21) Anmeldenummer: **85107935.0**

(22) Anmeldetag: **26.06.85**

(51) Int. Cl.⁴: **F 24 H 1/41**

(30) Priorität: **27.06.84 DE 3423628**
**10.08.84 DE 3429510**
**19.10.84 DE 3438326**
**06.02.85 DE 3503975**

(43) Veröffentlichungstag der Anmeldung: **02.01.86**
**Patentblatt 86/1**

(84) Benannte Vertragsstaaten: **AT BE CH DE FR GB IT LI NL SE**

(71) Anmelder: **Etablissement Agura, FL-9490 Vaduz (LI)**

(72) Erfinder: **Kehrel, Herbert, Schwefelstrasse 25, FL-9490 Vaduz (LI)**

(74) Vertreter: **Patentanwälte Schulze Horn und Hoffmeister, Goldstrasse 36, D-4400 Münster (DE)**

(54) **Heizkessel, insbesondere Kondensationsheizkessel, und Verfahren zu dessen Herstellung.**

(57) Heizkessel, insbesondere Kondensationsheizkessel, mit einer Brennkammer mit wenigstens einem daran anschliessenden Rauchgasabzug und einem diesen als Heizregister umgebenden Mantel eines Wärmeabführmediums, die durch eine Wärmeaustauschwand voneinander getrennt sind, wobei die Wärmeaustauschwand in direkter Beziehung bzw. Verbindung zum Rauchgaszug als Energiespender bzw. Energieträger angeordnet ist und jeweils das Wärmeabführmedium zwischen sich führende Wände des Heizregisters ein einstückiges Profil bilden und das Heizregister aus einzelnen geraden Profilstücken eines Strangpressprofiles aus Aluminium gebildet ist, die an ihren Enden durch Umlenkungen verbunden die Form eines Mäanders bildend angeordnet sind. Die Verbindung kann durch Schweissen, Pressschweissen mit und ohne Zusatzmaterial, aber auch mit Vorteil durch eine eutektische Lötverbindung, die unter Schutz- bzw. Inertgas oder Vacuum hergestellt ist ebenso wie durch Kleben mit hochfestem Klebematerial erfolgt sein.

EP 0 166 437 A2

## Heizkessel, insbesondere Kondensationsheizkessel, und Verfahren zu dessen Herstellung

Die Erfindung betrifft einen Heizkessel, insbesondere Kondensationsheizkessel, mit einer Brennkammer mit wenigstens einem daran anschließenden Rauchgaszug und einem diesen als Heizregister umgebenden Mantel eines Wärmeabführmediums, die durch eine Wärmeaustauschwand voneinander getrennt sind, wobei die Wärmeaustauschwand in direkter Verbindung zum Rauchgaszug als Energiespender und/oder Energieträger angeordnet ist und jeweils das Wärmeabführmedium zwischen sich führende Wände des Heizregisters ein einstückiges Profil bilden.

Heizkessel, insbesondere Kondensationsheizkessel, die auch als Brennwertkessel bezeichnet werden, weisen den Vorzug eines außerordentlich hohen Wirkungsgrades auf. Das Abgas verläßt den Heizkessel mit einer unter dem Kondensationspunkt liegenden Temperatur und die Wärme des durch den Brenner erzeugten Rauchgases wird optimal genutzt. Bei Abkühlung der Rauchgase annähernd bis auf die Temperatur des einfließenden Wasserrücklaufes

0166437

fällt dabei aus dem Rauchgas Kondensat aus. Durch dessen Kondensation wird Wärmeenergie gewonnen, welche beispielsweise bei einem mit Erdgas betriebenen Brenner etwa 1 KWh/m$^3$ Gas beträgt.

Bei der genannten Betriebsart eines Heizkessels ergeben sich Schwierigkeiten dadurch, daß das Kondensat schweflige Säure enthält und außerordentlich aggressiv ist. Ein der Feuerung des Wassererhitzers nachgeschalteter Wärmeaustauscher zwischen Rauchgas und zu erwärmendem Medium, zumeist einem Wasserkreislauf, muß infolgedessen in korrosionsresistenter Bauart ausgeführt sein. Vielfach ist es üblich, aus diesem Grunde die Wärmeaustauschflächen in einer Edelstahlqualität herzustellen. Einerseits ist diese Herstellung aus Gründen der Material- und Fertigungskosten relativ teuer, andererseits wird bei der Bearbeitung, insbesondere durch Schweißvorgänge, das Legierungsgefüge von Edelstahl destabilisiert und damit dessen Korrosionsbeständigkeit stellenweise erheblich beeinträchtigt.
Ein weiteres Problem besteht darin, in einem relativ eng begrenzten Bauraum die für einen hochwertigen Wärmeaustausch erforderlichen großen Wärmeaustauschflächen unterzubringen, und zwar auch so, daß das sich niederschlagende Kondensat leicht abgeleitet werden kann. Zudem muß das Heizregister die Möglichkeit einer problemlosen Reinigung bieten, die von Zeit zu Zeit erforderlich wird. Und schließlich müssen diese Forderungen mit einer verhältnismäßig preisgünstigen Fertigung in Übereinstimmung gebracht werden.

0166437

Zur Überwindung dieser Schwierigkeiten wurde bereits vorgeschlagen, einen Wärmetauscher zur Minimierung von Abgastemperaturen zwischen Kessel und Schornstein anzuordnen (DE-OS 31 18 447).

Die bekannte Einrichtung hat den Nachteil eines relativ großen Aufwandes sowie der Notwendigkeit, einen Einbau im Schornstein vorzunehmen. Dabei ist jedoch nicht auszuschließen, daß im Schornstein Kondensat anfällt oder gar mit dem Rauchgas aus dem Schornstein ausgetragen wird. Dies muß jedoch unter allen Umständen vermieden werden.

Der Erfindung liegt die Aufgabe zugrunde, einen Heizkessel, insbesondere Kondensationsheizkessel für eine Sammelheizungsanlage mit einer Brennkammer mit wenigstens einem daran anschließenden Rauchgaszug und einem diesen als Heizregister umgebenden Mantel eines Wärmeabführmediums, die durch eine Wärmeaustauschwand voneinander getrennt sind, wobei die Wärmeaustauschwand in direkter Verbindung zum Rauchgaszug als Energiespender und/oder Energieträger angeordnet ist, weiterzuentwickeln und zu verbessern, mit dem Ziel, innerhalb eines möglichst kleinen zur Verfügung stehenden Bauraumes ein Wärmeaustauschsystem mit möglichst großen aktiven Wärmeaustauschoberflächen anzugeben, hierfür optimale Wärmeübergangsverhältnisse zu schaffen, und mit möglichst wirtschaftlichen Werkstoffen und Fertigungsverfahren ein für eine kostengünstige Herstellung geeignetes und dabei gegenüber Korrosionseinwirkung durch schweflig saure Kondensate resistentes Heizgerät zu schaffen. Der erfindungsgemäße Heizkessel soll weiterhin besonders kompakt sein, eine optimale Wärmeausnutzung gewährleisten und sich für die Durchführung einer weitgehend mechanisierten, insbesondere vollautomatisierten Fertigung in großen Stückzahlen in besonderer Weise eignen.

Die Lösung der Aufgabe gelingt mit der Erfindung dadurch, daß das Heizregister aus einzelnen geraden Profilstücken eines Profilstranges gebildet wird, die an ihren Enden durch Umlenkungen verbunden miteinander im wesentlichen die Form eines Mäanders bildend angeordnet sind.

Mit Vorteil ergibt sich mit einzelnen geraden in Form eines Mäanders angeordneten Profilstücken ein äußerst kompakter Block eines Heizregisters mit der größtmöglichen Wärmeaustauschfläche innerhalb des verfügbaren Bauraumes sowie eine sehr vorteilhafte und wirtschaftliche Fertigung.

Das Heizregister, welches das zu erhitzende Medium führt, kann dabei mit Vorteil aus mittleren flachen Profilstücken bestehen, die an ihren Enden mit angesetzten Krümmern verbunden sind.
Auch kann mit Vorteil das Heizregister, welches das zu erhitzende Medium führt, aus mittleren flachen Profilstücken bestehen, die an ihren Enden mit einfachen oder doppelten Kniestücken verbunden sind. Dadurch wird der Bauraum eines kubischen Heizregisterblockes optimal genutzt.

Es können aber auch einzelne gerade Profilstücke an ihren Enden durch angebogene Krümmer beziehungsweise Biegestellen einstückig miteinander verbunden sein.

Es hat sich nämlich für den Fachmann sehr überraschend herausgestellt, daß flache Profilstücke der nachfolgend noch im einzelnen zu beschreibenden Struktur und Materialqualität problemlos zumindest im Winkel von 90 $^{\circ}$ gebogen werden können, ohne Risse oder Deformationen zu erleiden.

Mit Vorteil weist das Profil innen eine Anzahl von mit den Außenwänden einstückigen längsverlaufenden Kanälen und außen gleichgerichtete längsverlaufende Rippen auf.
Diese Formgebung eignet sich mit Vorteil dazu, daß das Profil aus stranggepreßtem Aluminium hergestellt ist.

Mit Vorteil wird die für einen Kondensationsheizkessel erforderliche Widerstandsfähigkeit des Materials gegen Korrosion dadurch erreicht, daß das Profil ein Strangpreßprofil aus Reinstaluminium ist.

Vorteilhaft können die Leichtmetallstrangpreßprofile als flächenhafte Elemente ausgebildet sein, deren Dicke einschließlich der rippenförmigen Wärmeübertragungsflächen wesentlich kleiner ist, als ihre Erstreckung in Länge und Breite.

Eine sehr vorteilhafte und preisgünstige Fertigung ergibt sich dadurch, daß die Strangpreßprofile eine Breitenerstreckung aufweisen, welche in etwa der lichten Weite des Wassererhitzers zwischen zwei parallelen Wänden entspricht.
Im Baukastensystem können aus solchen Profilen durch Parallelanordnung ebenso wie durch die Anzahl von Mäanderschleifen problemlos und kostengünstig Heizkessel in unterschiedlichen Leistungsklassen erstellt werden.

Die Kanäle solcher Profile können einen kreisförmigen oder elliptoidischen Querschnitt aufweisen, sie können aber auch eine eckige, vorzugsweise hexagonale Querschnittsform aufweisen.
Mit Vorteil sind die den Wärmeübergang begünstigenden Rippen als flache Stege ausgebildet, deren Querschnittsform rechteckig mit abgerundeten Kanten oder dreiecksförmig beziehungsweise trapezförmig verjüngt ausgebildet ist. Auch kann eine Rippe im Querschnitt die Kontur einer stumpfen Pyramide mit einer Höhe von etwa 8 bis 10 mm, einer Basisbreite von etwa 5 mm und einer oberen Querfläche von etwa 1 mm aufweisen.
Dabei können die auf einer Außenfläche eines Wärmeaustauschelementes angeordneten Rippen, im Querschnitt betrachtet, in Form und Anordnung in etwa Zähnen einer Zahnstange ähneln.
Hierdurch ergibt sich sehr vorteilhaft die Möglichkeit, eine Anordnung zu treffen, bei der jeweils zwei einander gegenüberliegende einen Strömungskanal für Rauchgas begrenzende Wärmeaustauscherelemente derart räumlich einander zugeordnet sind, daß jeweils eine im Querschnitt zahnförmige Rippe des einen Wärmetauscherelementes in den freien Zwischenraum zwischen jeweils zwei Rippen des anderen Wärmetauscherelementes hineinragt, derart, daß die Rippen der einander gegenüberliegenden Flächen einen im Querschnitt zick-zack-förmigen Strömungskanal umgrenzend bilden.
Beim Durchströmen des Rauchgases durch diesen Kanal findet ein sehr intensiver Wärmeübergang vom Rauchgas an die Wärmetauscherflächen dieser Profile statt.

Bei einem Heizkessel, dessen Mäanderblock mittels
Krümmern hergestellt ist, können mit Vorteil die
Krümmer ebenfalls Rippen aufweisen, die mit den Rippen
der Profilstücke fluchten.
Dies wird dadurch erreicht, daß die Rippen der
Krümmer und der Profilstücke an ihren Stoßstellen
gleiche Höhe und Form aufweisen. Ebenfalls können die
Profilstücke und die Krümmer gleiche Durchgangsquerschnitte aufweisen.

Bei einem so ausgebildeten Heizkessel können zur vorteilhaften Nutzung der aufgebrachten Wärmeenergie die
Seitenwände der Brennkammer und des Mäanderraumes einschließlich Decke und Boden von in der Form den Profilstücken und Krümmern entsprechenden Profilstücken und
Krümmern gebildet werden, die einen Profilstrang ausbilden, der in den des Mäanders übergeht.

Eine andere Ausgestaltung von Profilstücken zu
mäanderförmigen Schleifen kann mit Vorteil mit jeweils einem Kniestück in Form einer zwei beabstandete
rechte Winkel bildenden Umlenkung von etwa 180 °
gegenüber einer der Wände des Heizkessels ausgebildet
sein.
Eine optimale Strömungslenkung der Rauchgase wird
dadurch erreicht, daß zur Erzeugung eines parallel
gerichteten Gegenstromes in die Mäanderschlingen Leitbleche eingesetzt sind und Seitenwände zur Verhinderung
des Querstromes vorhanden sind.
Mit Vorteil können die Leitbleche genoppt sein oder
Stufen beziehungsweise Sicken aufweisen oder sonst

0166437

wie profiliert sein.

Um einen Wärmeabfluß des Heizkessels nach außen hin
zu vermeiden, sieht eine weitere Ausgestaltung mit
Vorteil vor, daß sich der mäanderförmig geformte Teil
des Profilstranges beziehungsweise des ihn bildenden
Profils in einem Mantel fortsetzt, welcher den mäanderförmig geformten Teil und die Brennkammer umschließt.

Weiter ist mit Vorteil vorgesehen, daß die Brennkammer von Leichtmetall-Strangpreßprofilen gebildete,
wasserführende Wände aufweist, wobei fallweise auch
eine Vorderwand und/oder eine Rückwand mit wasserdurchströmbaren Strangpreßprofilen ausgebildet sind.
Dabei können die wasserführenden Wände der Brennkammer brennkammerseitige Rippen aufweisen.

Vorteilhaft kann der den mäanderförmigen Block bildende Teil des Profilstranges mit dem Mantel über
Klötze verbunden sein. Hierdurch wird mit Vorteil
die Möglichkeit einer annähernd spannungslosen Wärmedehnung erreicht.

Eine weitere vorteilhafte Ausgestaltung des Heizkessels sieht vor, daß das Rauchgas in zwei getrennten Teilströmen und in zwei getrennten, mäanderförmig angeordneten Profil-Teilsträngen beidseitig
aus der Kammer abgezogen wird und getrennt auf verschiedenen Seiten der Brennkammer an jedem das Wärmeabführmedium führenden Profil-Teilstrang entlangströmt.

Um die Forderung nach einer zweckmäßigen und dadurch
einerseits kostengünstigen und andererseits für vollautomatisierte Arbeitsabläufe geeigneten Fertigung zu erfüllen, sieht eine weitere Ausgestaltung vor, daß ein Kniestück beziehungsweise eine rechtwinklige Umlenkung mit durchtrennter äußerer Wand und durchtrennten Kanälen und rechtwinklig gebogener innerer Wand ausgebildet ist, wobei die infolge der Biegung aufklaffenden Seitenwände mit eingeschweißten Eckblechen und die im Biegungsbereich auseinanderklaffenden Bereiche der äußeren Wand mit einem Deckblech mediendicht verschweißt sind.

Dabei kann zwischen zwei von einem doppelten Kniestück ausgehenden Profilstücken eine die Strömungsrichtung des Rauchgases umlenkende Wand angeordnet sein, und diese Wand kann von Wasser durchströmbar mit Kanälen ausgebildet sein.

Bei einem so gearteten Heizregister kann die Brennkammer in dessen unteren Bereich und das Wärmetauschersystem darüberliegend angeordnet sein, oder umgekehrt die Brennkammer im oberen Bereich und das Wärmetauschersystem darunterliegend.

Die letztere Anordnung ist fallweise zur problemlosen Abführung des sich im Heizregister bildenden sauren Kondensates besonders vorteilhaft. Zur Beurteilung dieses Erfordernisses muß berücksichtigt werden, daß beim Betrieb des Heizkessels mit einem Erdgasbrenner je $m^3$ Erdgas ca. 0,7 Liter Kondensat und beim Betrieb mit Heizöl fallweise die doppelte bis dreifache Menge Kondensat anfällt.

Seitliche Begrenzungswände des Wärmetauschersystems sind vorteilhaft mit wasserdurchströmbaren Kanälen ausgebildet, ebenso vordere und hintere Begrenzungswände.

Auch kann das Wärmetauschersystem mit mehreren, vorteilhaft mit jeweils zwei getrennten, von Wärmetauscherelementen gebildeten Wärmetauschersträngen ausgebildet sein, wobei jeder Strang mit im Gegenstrom von den wärmeaustauschenden Medien durchströmbar in Mäanderformation angeordneten Rauchgaszügen beziehungsweise Wasserkanälen ausgebildet ist.

Weil das Heizregister des Kessels infolge der Mäanderform des Wärmeaustauschstranges eine Vielzahl von Umlenkungen aufweist, durch welche die einzelnen Profilstücke verbunden sind, fällt der größte Teil der Produktionskosten bei der Herstellung dieser Umlenkverbindungen an.

Eine sehr zweckmäßige und unkomplizierte Art der Umlenkungsausbildung wird infolgedessen mit der Erfindung dadurch vorgeschlagen, daß das Heizregister aus verschieden langen gleichartigen Profilstücken zusammengesetzt ist, die jeweils an ihren Enden auf Gehrung geschnitten und an den Schnittstellen miteinander verbunden sind. Diese Verbindung kann durch Elektronenstrahlschweißen vollautomatisch erfolgen, sie kann auch durch Schweißen mittels einer abschmelzenden Elektrode erfolgen.

Auch können Profilstücke und Krümmer beziehungsweise Kniestücke miteinander durch Preßschweißen beziehungsweise durch Preßschweißen mit Zusatzmaterial verbunden sein.

Mit Vorteil wird eine derartige Umlenkungsverbindung auch dadurch hergestellt, daß zur Bildung rechteckiger Profilverbindungen die Kanten der aneinanderstoßenden Profile miteinander verschweißt und die verbleibende Öffnung mit dem Profilstück abgedeckt ist, dessen Längsränder mit den freien Profilkanten verschweißt sind, wobei die inneren Längskanten des
nur einseitig Rippen aufweisenden Profilabschnitts
mit den inneren Längskanten der Profile verschweißt
und die Profilstücke und deren Ränder mit den Profilen
und dem Profilabschnitt verschweißt sind.

Dabei ist weiter vorgesehen, daß die einander zugewandten Längswände der den Mäander bildenden Profilstücke mit einer Längswand eines nur auf einer Seite
Rippen tragenden Profilabschnitts verschweißt sind
und freibleibende außen liegende Wände von weiteren
Profilstücken überbrückt werden, deren Längskanten mit
den äußeren Wänden des oberen oder unteren Profils
einerseits und der äußeren Wand andererseits verschweißt sind. Dabei kann das Profilstück äußere
Rippen aufweisen und ein Ausschnitt des Hauptprofils
sein.

Zum Schutze des so hergestellten Heizregisters vor
örtlicher Überhitzung insbesondere im Bereich der
Brennkammer ist mit Vorteil vorgesehen, daß der
Mantel im oberen Bereich der Brennkammer innen eine
Abdeckung aus hochhitzebeständigem Material aufweist, wobei dieses hochhitzebeständige Material vorzugsweise eine Nickel-Molybdän-Chrom-Legierung wie
Inconel ist.

Sehr überraschend hat sich weiterhin gezeigt, daß die
erfindungsgemäß vorgesehene Mäander-Bauform des Heizregisters aus gleichartigen Strangpreß-Profilabschnitten sich optimal zur Herstellung der Verbindungen
der Umlenkungen durch Löten eignet.

Infolgedessen sieht ein erfindungsgemäßes Verfahren vor, daß das Löten unter Verwendung eines Speziallotes zum flußmittelfreien Hartlöten von Aluminiumwerkstoffen in Schutzgas, Inertgas oder Vakuum erfolgt, wobei dieses Speziallot in an sich bekannter Weise aus einer Legierung von Silizium, Wismuth, Strontium, Barium und/oder Antimon besteht.

Mit Vorteil sieht eine Ausgestaltung des Verfahrens dabei vor, daß das Lot in Form einer Folie oder Platte in die zu schließenden Fugen eingelegt wird, und daß vorteilhaft diese Folie oder Platte die Form der Schnittfläche der miteinander zu verbindenden Materialstücke aufweist, beziehungsweise daß das Lot in flüssiger Form auf die Schnittfläche aufgebracht wird.

Die Erfindung wird in Zeichnungen in einer bevorzugten Ausführungsform gezeigt, wobei aus den Zeichnungen weitere vorteilhafte Einzelheiten der Erfindung entnehmbar sind. Es zeigen:

Fig. 1    perspektivisch den erfindungsgemäßen Heizkessel für Gegenstrom, teilweise im Schnitt,

Fig. 2    im Schnitt einer zur Brennkammerachse senkrechten Ebene den Heizkessel gemäß Fig. 1;

Fig. 3    perspektivisch den erfindungsgemäßen Heizkessel für Quer/Gegenstrom, teilweise im Schnitt;

Fig. 4    im Schnitt einer zur Brennkammer senkrechten Ebene eine Ausführung des Heizkessels ähnlich Fig. 3, jedoch für reinen Gegenstrombetrieb;

Fig. 5    einen schematischen Plan der Wasser/Rauchgasführung im Wärmeaustauschsystem eines
          Heizkessels;

Fig. 6    ein Blockschaltbild eines mit zwei Wärmetauschersträngen eines Wärmetauschersystems
          ausgebildeten Heizkessels;

Fig. 7    einen Schnitt durch eine vereinfachte Ausführung eines Heizkessels mit obenliegender
          Brennkammer und darunterliegendem Heizregister;

Fig. 8    eine perspektivische Detaildarstellung
          des Wärmetauschersystems mit einer die
          Strömungsrichtung des Rauchgases umlenkenden, mit Kanälen für Wasser ausgebildeten
          Wand;

Fig. 9    zwei Wärmeaustauscherelemente aus Leicht-
und       metall-Strangpreßprofilen, in natürlicher
Fig. 10   Größe, im Schnitt;

Fig. 11   ein Element zur Erzeugung von Heizluft,
          im Schnitt;

Fig. 12   im Schnitt erfindungsgemäß verwendete un-
bis       terschiedliche Aluminium-Strangpreßprofile;
Fig. 15

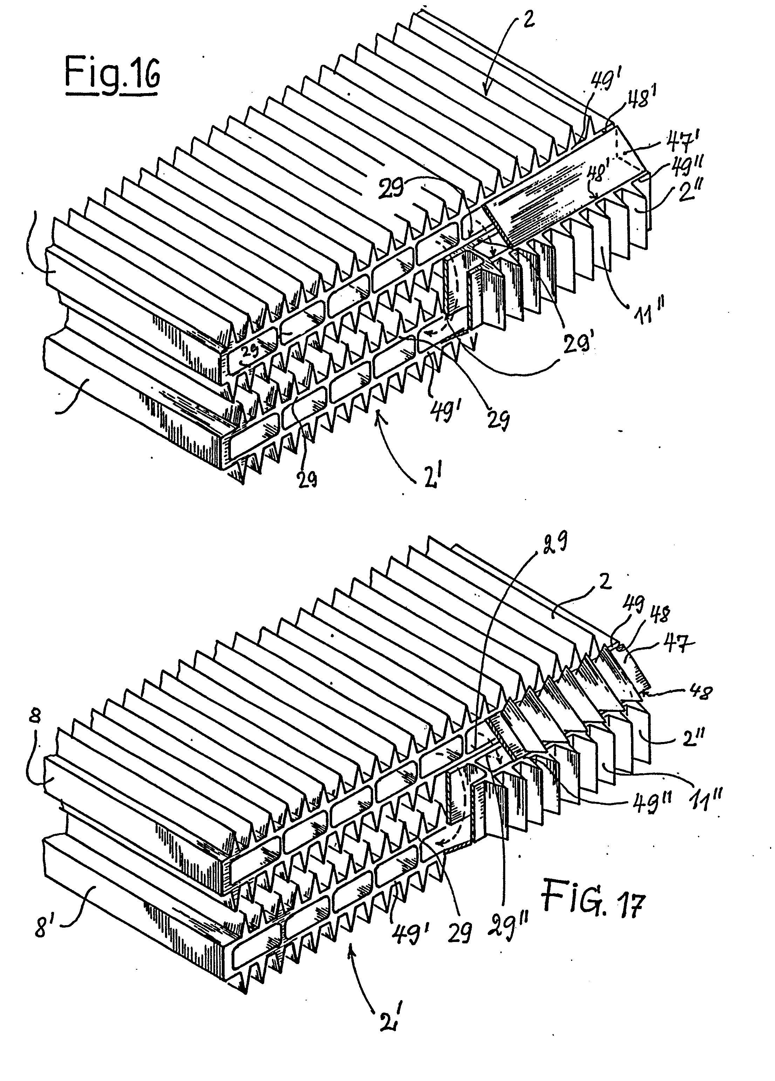

Fig. 16   perspektivisch im Teilschnitt die Ver-
          bindung der Profilstücke eines Mäander-
          bogens;

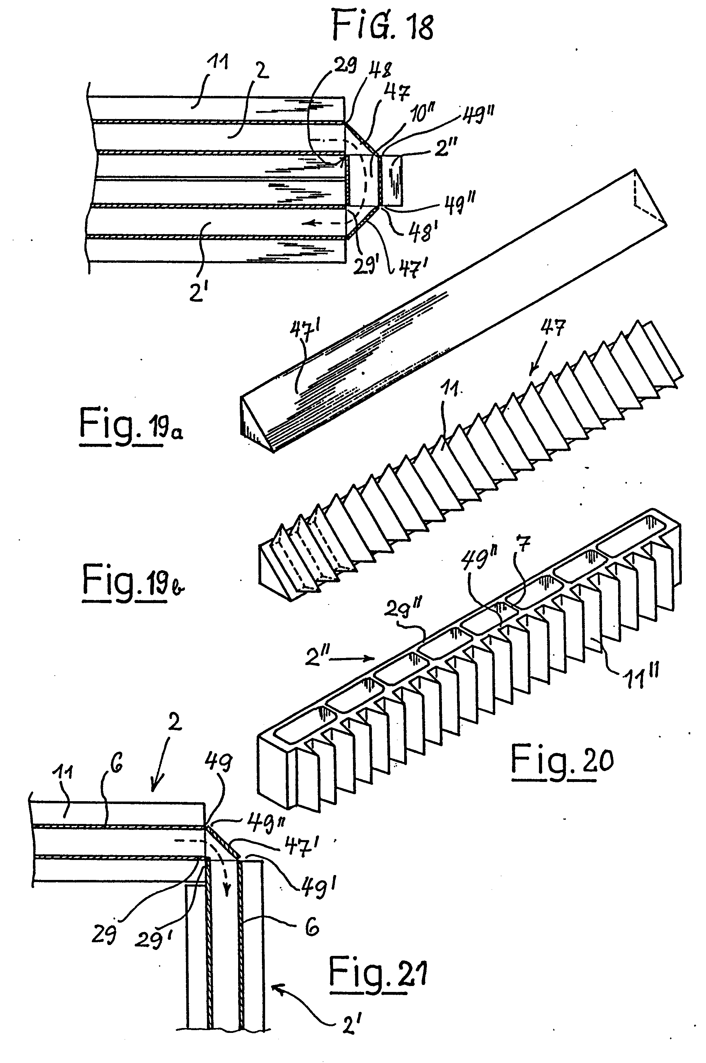

Fig. 17     die Verbindung gemäß Fig. 16 mit Teilabschnitten des Hauptprofils zur Verbindung
            der Profilstücke mit einem Profilabschnitt;

Fig. 18     einen Querschnitt durch einen Mäanderbogen
            gemäß der Erfindung;

Fig. 19a    verschiedene Ausgestaltungen der Profil-
und         stücke zum Einschweißen gemäß den Figuren
Fig. 19b    16 bis 18;

Fig. 20     perspektivisch den Profilabschnitt zum
            Anschweißen an die Profilstücke eines
            Mäanderbogens und;

Fig. 21     im Querschnitt schematisch die Verbindung
            zweier Profilstücke in einem rechten
            Winkel;

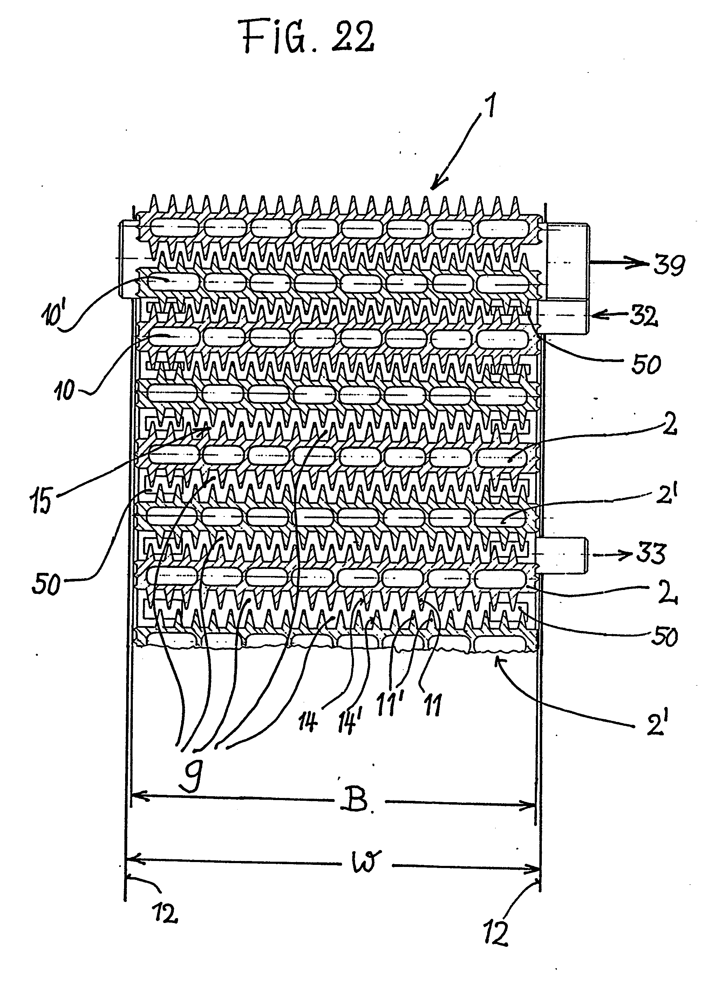

Fig. 22     im Querschnitt ein aus Mäanderbögen gemäß
            Fig. 16 bis 21 hergestelltes Heizregister;

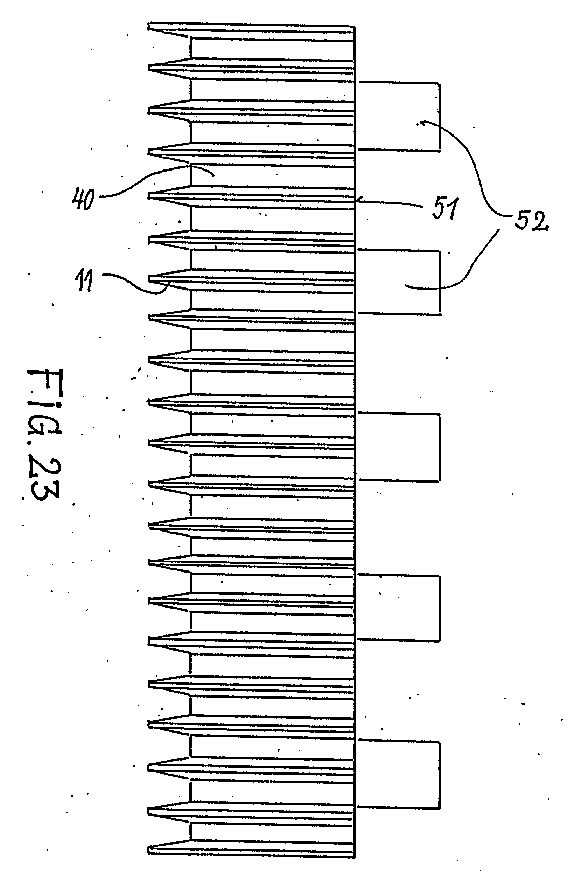

Fig. 23     eine Draufsicht auf einen Krümmer;

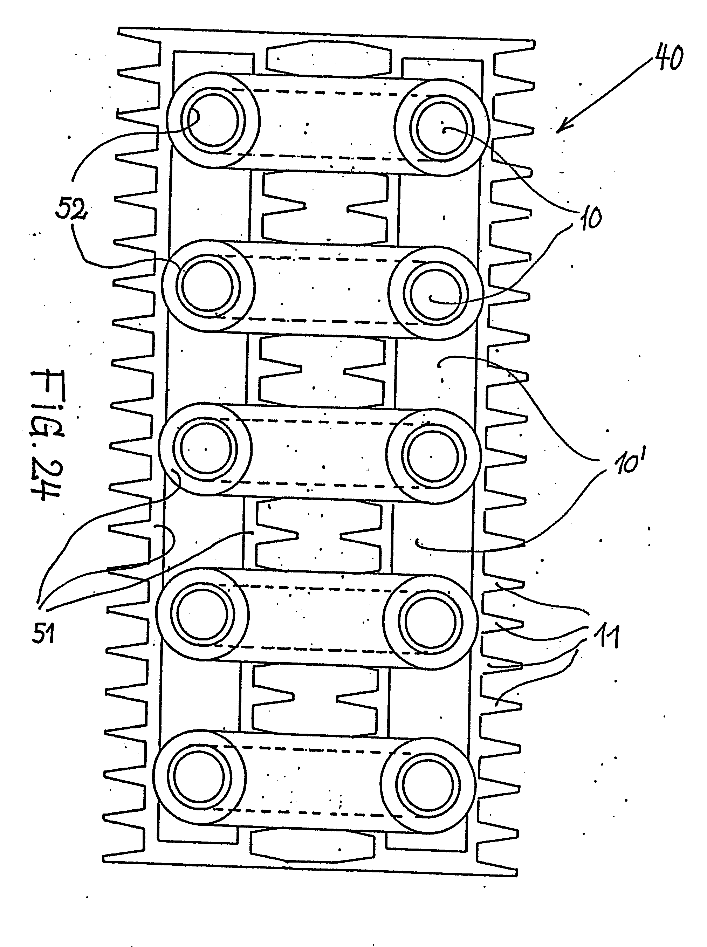

Fig. 24     die element- beziehungsweise profilstückseitige Ansicht eines Krümmers;

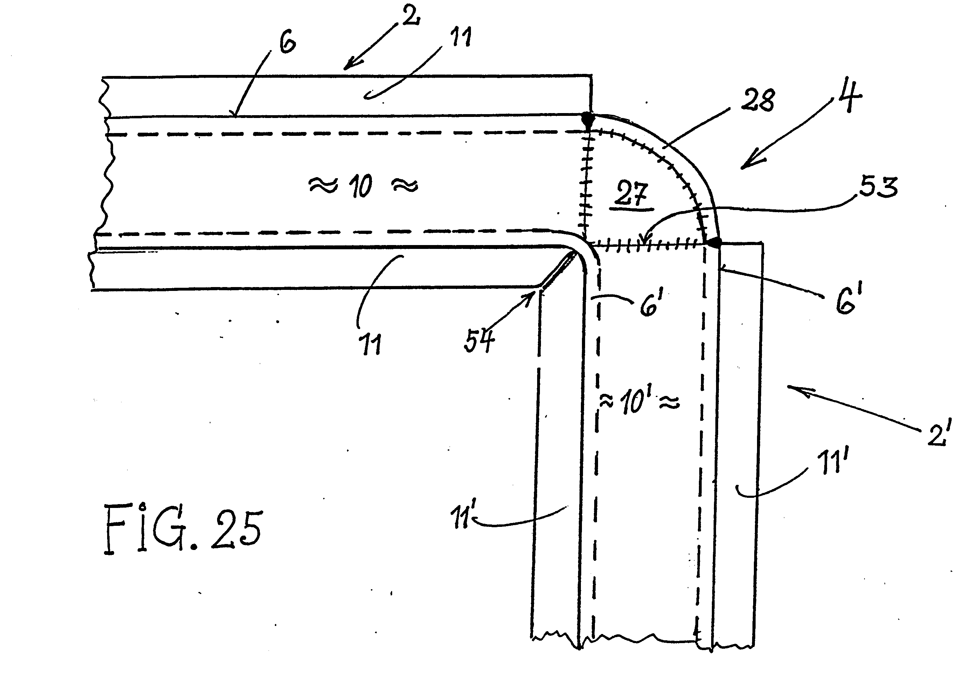

Fig. 25     eine Ausführung einer rechtwinkligen
            Umlenkung eines Strangpreßprofiles in geschweißter Ausführung, in Seitenansicht;

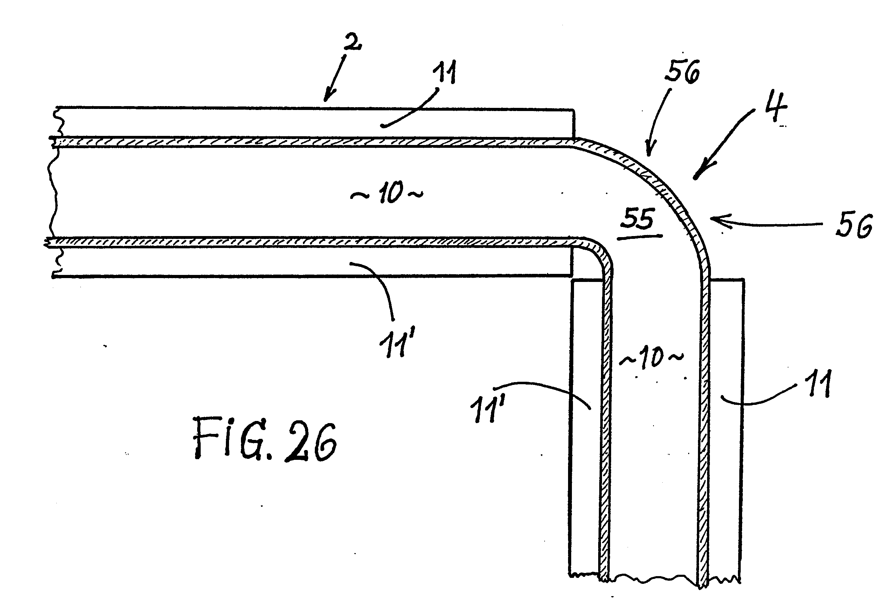

Fig. 26     eine Ausführung einer rechtwinkligen Um-
            lenkung eines Strangpreßprofiles in ein-
            stückiger Biegung hergestellt; in Seiten-
            ansicht.

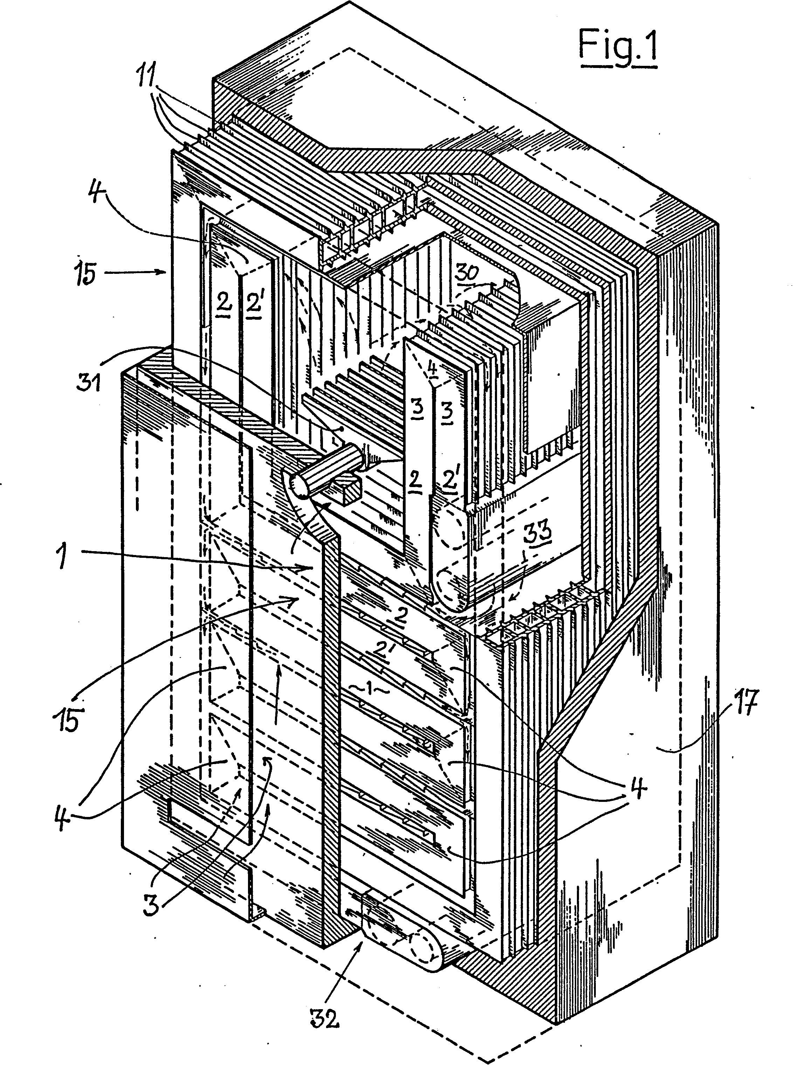

Gemäß Fig. 1 weist der erfindungsgemäße Heizkessel, im Teilschnitt dargestellt, innerhalb einer isolierenden Schale 17 einen mäanderförmigen Kesselblock 15 auf, über welchem eine Brennkammer 30 mit einem Brenner 31 angeordnet sind und wobei diese Anordnung und der Block 15 von einem wasserführenden Mantel 5 umgeben sind.

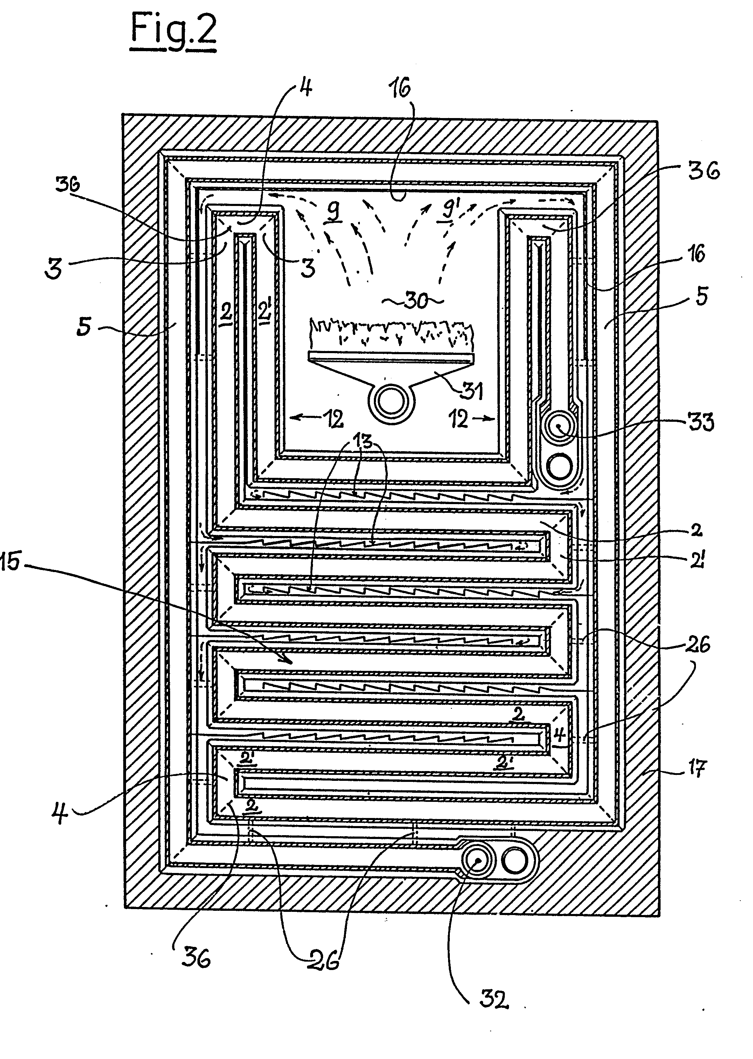

Aus der Zusammenschau der Figuren 1 und 2 ist erkennbar, daß der Heizkessel Einlauforgane 32 unten und Auslauforgane 33 rechts in halber Höhe aufweist. Diese sind jeweils für zwei zu erwärmende Medien, beispielsweise Heizwasser und Heizluft doppelsträngig ausgebildet. Durch Ausbildung und Anordnung des Heizregisters 1 in Mäanderform ist sichergestellt, daß das strömende Rauchgas im Gegenstrom an den zu erwärmenden Medien gekühlt wird, während das zu erwärmende Medium im Bereich hoher Rauchgastemperaturen beziehungsweise im Bereich von Flammenstrahlung mit hohem Wärmeübergang strömt. Das Heizregister 1 besteht aus einem Profilstrang, der aus einzelnen geraden Profilstücken 2,2' gebildet wird, die an ihren Enden 3 durch Umlenkungen 4 verbunden, miteinander im wesentlichen die Form eines Mäanders bildend angeordnet sind. Diese Profilstücke 2 unterschiedlicher Länge sind an ihren Stoßstellen auf Gehrung geschnitten und dort durch eines der nachfolgend beschriebenen Verbindungsverfahren, beispielsweise durch Elektrodenstrahlschweißen miteinander verbunden. Im Bereich des mäanderförmigen Blocks 15 werden also jeweils zwei längere Profilstücke 2 durch ein dazwischenliegendes kürzeres 2' miteinander verbunden.

Besonders vorteilhaft ist dabei, daß durch das Elektrodenschweißverfahren Schweißwülste nicht auftreten, die den Durchgang der Medien behindern würden, und daß auch innere Stege 7 der Profile 2, 2' miteinander verschweißt werden.

Auf diese Weise wird es möglich, die doppelsträngige Ausführung zur Erwärmung zweier Medien, beispielsweise Heizungswasser und Brauchwasser ohne die Verwendung eines getrennten Boilers zu ermöglichen, oder auch eine Heißluftheizung als Wärmequelle bedienen zu können, wobei gleichzeitig eine Brauchwassererzeugung integriert ist.

Dabei werden sogenannte Ausgestaltungsmöglichkeiten auf einfachste und wirtschaftlichste Weise gelöst, weil der als Ausgangsmaterial verwendete Profilstrang beziehungsweise die von diesem mit geraden 45-Grad-Schnitten abgetrennten Profilstücke 2, 2' mit sehr geringem Arbeitsaufwand bereitgestellt und durch die erfindungsgemäß angegebenen Verbindungsverfahren, wozu auch das Löten unter Schutzgas gehört, zum Heizregister 1 verbunden werden können.

Dabei zeichnet sich der erfindungsgemäße Heizkessel durch äußerste Kompaktheit und einen thermisch optimalen Wirkungsgrad aus. Hierzu trägt bei, daß bei der optimalen Nutzung der aufgebrachten Wärmeenergie vorteilhaft der mäanderförmig geformte Teil des Heizregisters 1 sich in einem medienführenden Mantel 5 fortsetzt, welcher den mäanderförmigen Block 15 und die Brennkammer 30 umschließt.

Die Längswände 6 der Profile 2, 2' sind mit nach außen weisenden Rippen 11 versehen. Sie werden durch Querwände 8, 8' im Profil einstückig miteinander verbunden und zugleich auf Abstand gehalten. Dadurch ist es möglich, die wärmeabführenden Medien unter erheblichem Druck zu halten und insbesondere die behördlichen Druckprüfungsvorschriften problemlos zu erfüllen.

Die Brennkammer 30 kann - wie in Fig. 2 gezeigt - in ihrem oberen Bereich eine Abdeckung 16 aus hochwarmfestem Material aufweisen, eine solche kann aber auch in ihrem unteren Bereich und an der inneren Fläche der Wände 12 vorgesehen sein.
Diese Abdeckung 16 kann aus hochwarmfesten Nickel-Molybdän-Chrom-Legierungen bestehen, es können aber auch keramische beziehungsweise feuerfeste Materialien zum Einsatz kommen.

Die Rauchgase werden gemäß Fig. 1 und 2 in zwei Teilströmen seitlich der Brennkammer 30 abgezogen und auf verschiedenen Seiten in Mäanderform dadurch geführt, daß in die Mäanderschlingen Leitbleche 13 eingesetzt sind, die zur Verbesserung des Wärmeüberganges zu den Profilen hin Stufen oder Sicken oder dergleichen aufweisen können.

Es ist ein weiterer Vorteil der Erfindung, daß die einzelnen Profilstücke beziehungsweise vorgefertigte Einzelteile in einer Verpackung verschickt werden können, und daß sie nach Zusammenfügen durch verhältnismäßig einfache Mittel wie Pressen zusammengefügt werden können. Es ist also nicht nur ein einfacher Transport möglich, sondern aufgrund mit der erfindungsgemäßen Konstruktion des Heizkessels ermöglichten Baukastenprinzips kann durch Zuschneiden der Länge der Profile 2, 2' ein Heizkessel beliebiger Größe je nach spezieller Anforderung montiert werden.

0166437

Die Verpackungen können auch die Einzelstücke bereits vorgelängt enthalten, wobei durch Nebeneinandersetzen verschiedener Heizregister Leistungssprünge beliebiger Größe eingestellt werden können.

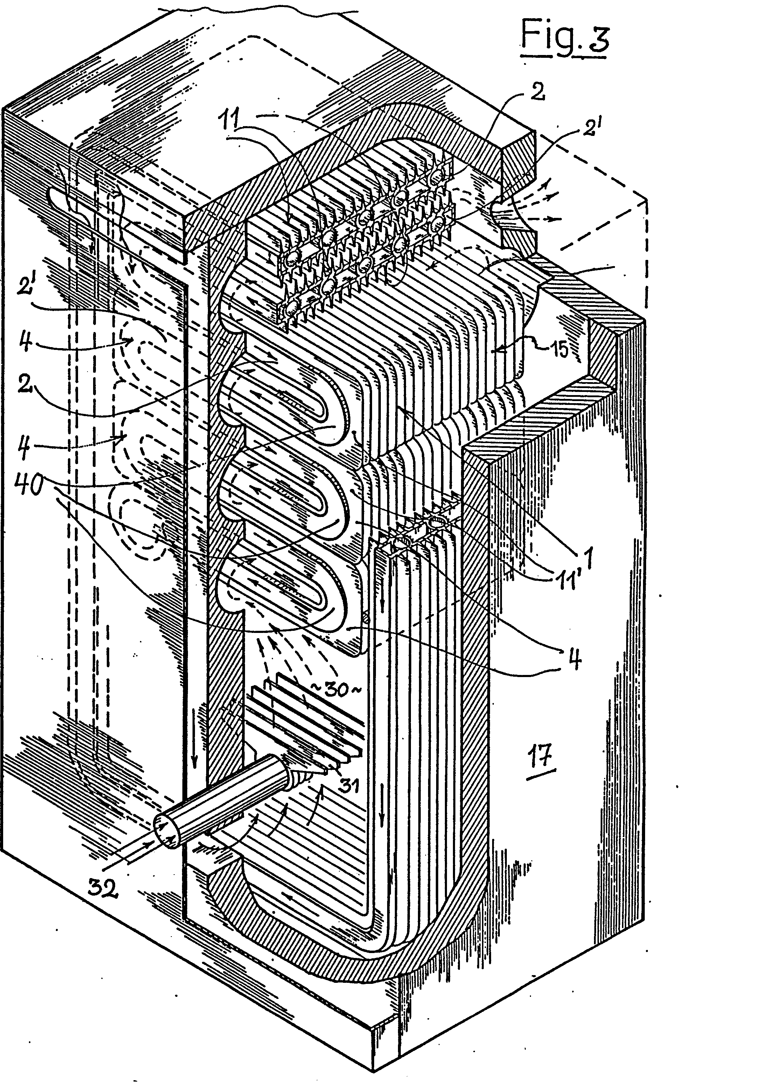

Fig. 3 zeigt einen erfindungsgemäß aus einstückigen Strangpreß-Profilstücken 2 hergestellten Heizkessel mit einem Heizregister 1 in Form eines Mäanderblockes 15. Bei diesem sind, abweichend von der Bauart des Heizkessels gemäß Fig. 1 und 2, die Umlenkungen 4 in Form von Krümmern 40 ausgebildet. Im weiteren Unterschied zur Ausführung der Heizkessel gemäß Fig. 1 und 2 liegt die Brennkammer 30 im unteren Bereich und der Mäanderblock 15 im oberen Bereich. Ein wasserführender Mantel 5 umgibt die Brennkammer 30 und sorgt für eine optimale Nutzung der aufgebrachten Wärmeenergie. Vorteilhaft weisen die Profilstücke 2 ebenso wie die Krümmer 40 äußere Rippen 11 auf, die an den Anschlußstellen miteinander fluchten und die an diesen Anschluß- oder Stoßstellen gleiche Höhe und Form aufweisen.

Die Verbindung der Profilstücke 2 mit den Krümmern 40 erfolgt vorteilhaft durch Preßschweißen mit oder ohne Zusatzmaterial, falls nicht eine Verbindung durch Löten oder reines Schweißen erfolgt.

Vorteilhaft ist im Inneren der sowohl von oben gesehen als auch im Querschnitt länglich-rechteckigen Profilelemente eine Anzahl von Kanälen zur Brauchwasser- oder auch Heizlufterzeugung vorhanden.

Die Profilstücke 2 sowie die Krümmer 40 bestehen aus Aluminium, vorteilhaft aus Reinst-Aluminium und die Schweißtemperaturen liegen daher so niedrig, daß das Schweißen problemlos erfolgen kann.

In der Ausbildung gemäß **Fig.** 3 strömt durch den **Brenner** 31 erzeugtes Rauchgas sowohl quer zu den **Elementen** und den darauf angebrachten Rippen 11, **teilweise** aber auch in deren Richtung und ergeben dabei einen optimalen Wärmeübergang. Die Rippen 11 sorgen einerseits für eine hervorragende Wärmeabfuhr zu den in den Elementen beziehungsweise Profilstücken 2 geführten zu erhitzenden Medien und andererseits für eine gute Durchwirbelung der Rauchgase, so daß diese bis zum Austritt aus dem Heizregister 1 auf Temperaturen unterhalb des Kondensationspunktes abgekühlt werden.

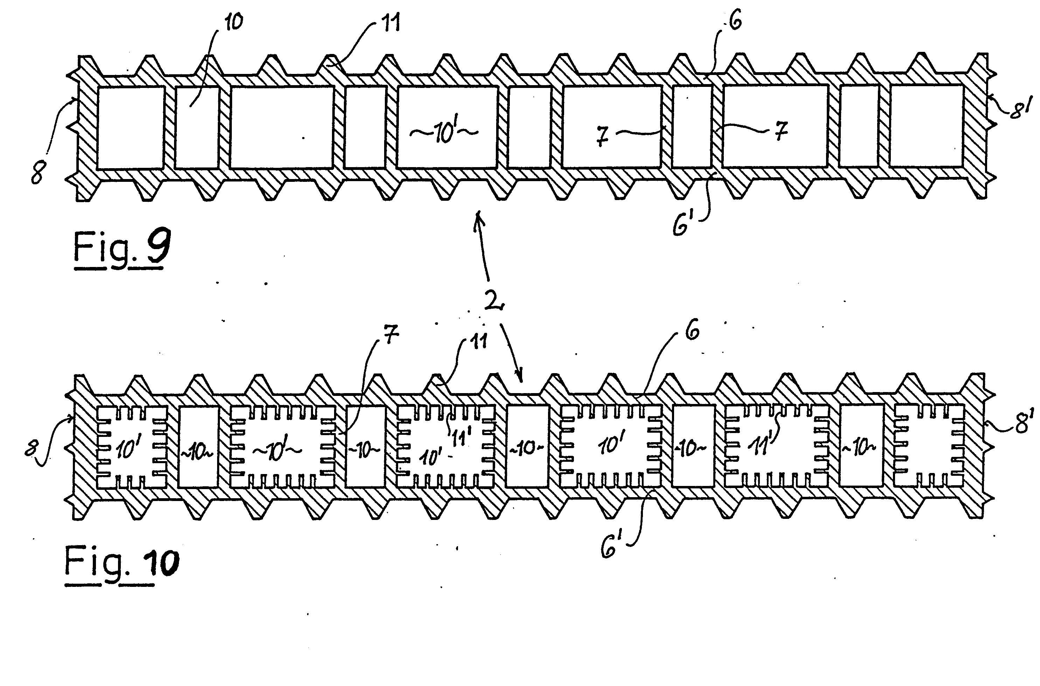

Die Krümmer 40 weisen ebenfalls Rippen 11' auf, so daß sie auch in besonderem Maße an der Wärmeübertragung teilnehmen. Der Innenraum der Profilstücke 2 sowie der Krümmer 40 weist Kanäle 10 auf, so daß nicht nur Heizwasser, sondern in Kanälen 10' (Fig. 9 bis 12) Brauchwasser oder Heizungsluft erhitzt werden kann.

Um die Profilstücke 2 mit den Krümmern 40 zuverlässig zu verbinden, können die sich berührenden Flächen entweder einerseits mit einem konusartigen Einzug oder andererseits einem dareinpassenden Vorsprung versehen sein, falls nicht eine Verbindung mittels Nut und Feder gewählt wird. Aber auch bei einer Verbindungsart wie Preßschweißen kann eine völlig glatte Verbindungsfläche zwischen Profilstücken 2 und Krümmern 40 vorgesehen sein.

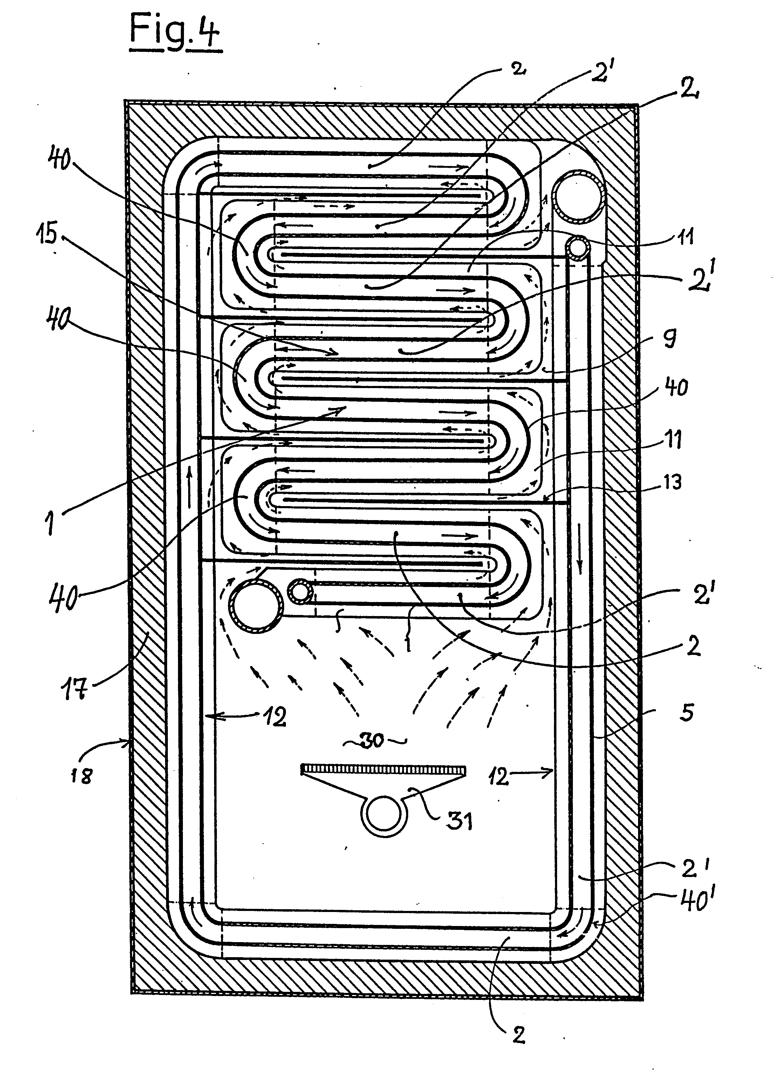

Gemäß **Fig.** 4 sind zur Erzielung eines reinen Gegenstroms, der ebenfalls mäanderförmig fließt, in die Mäanderschlingen Leitbleche 13 eingesetzt, die vorzugsweise genoppt sind.

- 20 -

0166437

Die Konstruktion des Heizregisters 1 ist hinsichtlich des Mäanders selbsttragend, dieser wird lediglich gegenüber den Seitenwänden an einigen z.B. Greifstellen fixiert.

Rauchgaszüge 9 ergeben sich infolge der Anordnung der Leitbleche 13 ebenfalls in Mäanderform und damit gleichgerichtet zu den Rippen 11 der Profilstücke 2 sowie der Krümmer 40. Die Brennkammer 30 ist innerhalb von Wänden 12 eines wasserführenden Mantels 5 angeordnet und mit einer isolierenden Schale 17 fest verkleidet. Diese kann aus einem wärmebeständigen, äußerst leichten Kunststoffschaum bestehen, der von einem äußeren Mantel 18 aus dünnem Blech gehalten wird. Die 90 $^O$-Umlenkungen der Profilstücke 2 des wasserführenden Mantels 5 sind mit 90 $^O$-Krümmern 40' in der bereits beschriebenen Weise miteinander verbunden.

Wie im folgenden noch zu erläutern, können 90-grädige Verbindungen von Profilstücken auch durch Schweißkonstruktion (Fig. 25) oder durch reine Biegebearbeitung (Fig. 26) ausgebildet sein.

Die Ausbildung einer Mäanderschleife entweder durch Krümmer 40 oder durch mit Gehrungsschnitten angesetzte kurze Profilstücke 2' ist eine Frage, deren Entscheidung von der Fertigungsplanung und Fertigungseinrichtung abhängt. Krümmer bedürfen einer besonderen Anfertigung, während die eckig in Form von Kniestücken eingesetzten Profilteile 2' aus einheitlichem Vormaterial herstellbar sind. In beiden Fällen können Verbindungsverfahren wie Preßschweißen oder Löten angewendet werden und ergeben kompakte sowie wärmewirtschaftlich optimale Mäanderblöcke. Die eckige Verarbeitung mit Kniestücken ist vom Standpunkt des eingesetzten Materials etwas günstiger, während die Krümmer

- 21 -                0166437

hinsichtlich der Strömungswiderstände vorteilhafter sind. Im Endergebnis führen beide Verbindungsarten zu fertigungstechnisch und wärmewirtschaftlich optimalen Konstruktionen und sind daher als gleichwertig anzusehen.

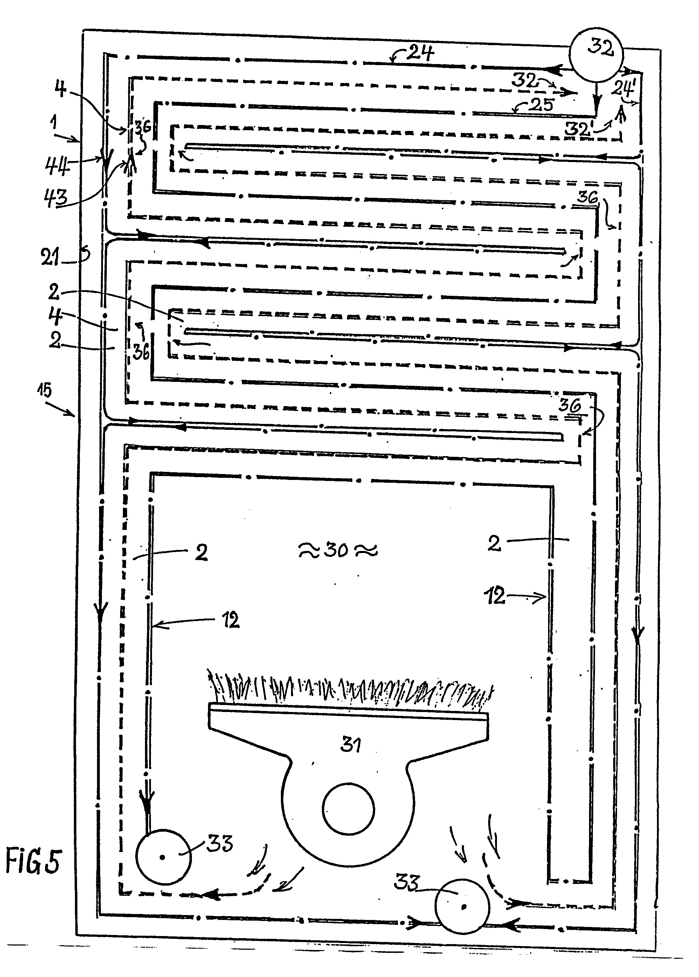

Einen schematischen Fließplan beispielsweise einer Wasser/Rauchgasführung im Wärmetauschsystem des Mäanderblockes 15 zeigt Fig. 5. Der kalte Wasservorlauf tritt bei 32 in das Heizregister 1 ein und wird in drei Wärmetauscherstränge 24, 24' und 25 aufgeteilt. Zu erwärmendes Wasser strömt entlang den strichpunktierten Linien im Gegenstrom zum Rauchgas, dessen Züge rein schematisch mit unterbrochenen Linienzügen angegeben sind. Die beiden wärmeaustauschenden Medien strömen im Gegenstrom in entgegengesetzten Richtungen 43 (Rauchgas) und 44 (Wasser) durch den Mäanderblock 15. Rein schematisch ist die Brennkammer 30 mit dem Brenner 31 angedeutet, deren Wände 12 von wasserführenden Wärmeaustauschelementen 2 umgeben sind. Die nach der Lehre der Erfindung äußerst gedrungene, platzsparende Ausbildung der Strangpreß-Wärmetauscherelemente 2 und deren sehr günstige Wärmeleitfähigkeit infolge der Verwendung von Aluminium ermöglicht die Unterbringung der Wärmetauscherstränge 24, 24', 25 mit relativ großen Wärmeaustauschflächen und relativ hohen Wärmeübergangswerten auf engstem Bauraum. Hierfür sind mit Vorteil die Strangpreßelemente 2 mit jeweils einem doppelten Kniestück 36 in Form einer zwei beabstandete rechte Winkel bildenden Umlenkung 4 von etwa 180 $^{\circ}$ gegenüber den Heizkesselwänden 21 ausgebildet.

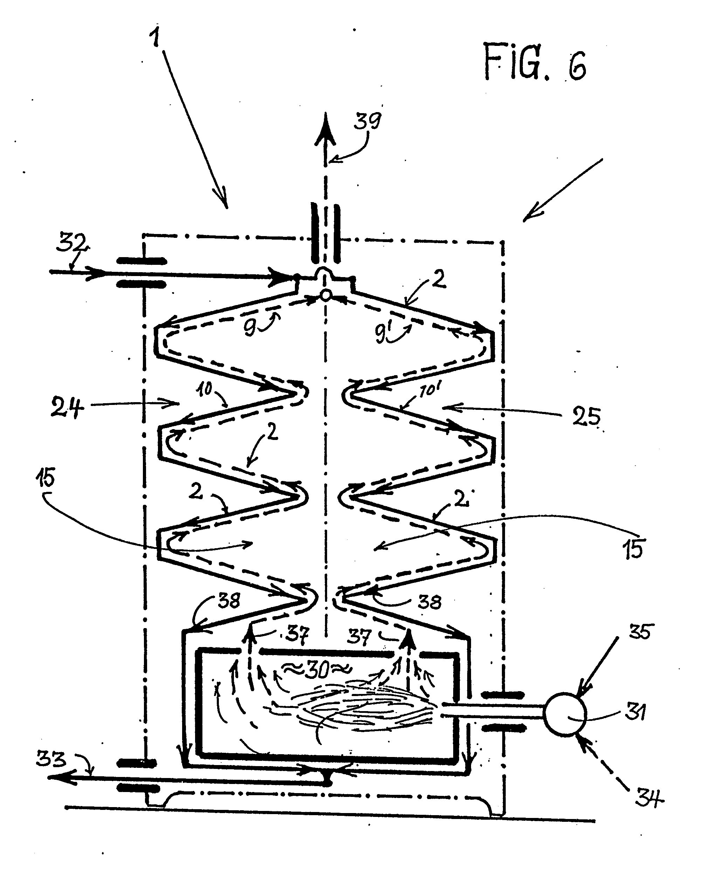

Ein Blockschaltbild eines mit zwei Wärmetauschersträngen 24 und 25 ausgebildeten Heizkessels zeigt Fig. 6. In die Brennkammer 30 ragt die Düse eines

- 22 -

Brenners 31, dem gemäß Pfeil 35 Brennstoff und gemäß Pfeil 34 Brennluft zugeführt werden. Rauchgase der Flamme gelangen in Strömungsrichtung 37 in den Bereich zweier Wärmetauschersträge 24 und 25, und vollziehen im Gegenstrom 38 zum zu erhitzenden Medium den vorgesehenen Wärmeaustausch. Abgas wird bei 39 abgeleitet, Heißwasser beim Auslaß 33, während kälteres Vorlaufwasser bei 32 in den Heizkessel einströmt und darin in die beiden Stränge 24 und 25 aufgeteilt wird.

Im gezeigten Ausführungsbeispiel sind die Mäanderschleifen so angeordnet, daß die geraden Profilstücke 2 jeweils schräg zur Horizontalen geneigt sind. Hierdurch wird zwar ein etwas größerer Bauraum in Anspruch genommen, jedoch ergibt sich eine sehr unkomplizierte Möglichkeit der Abführung des Kondensats.

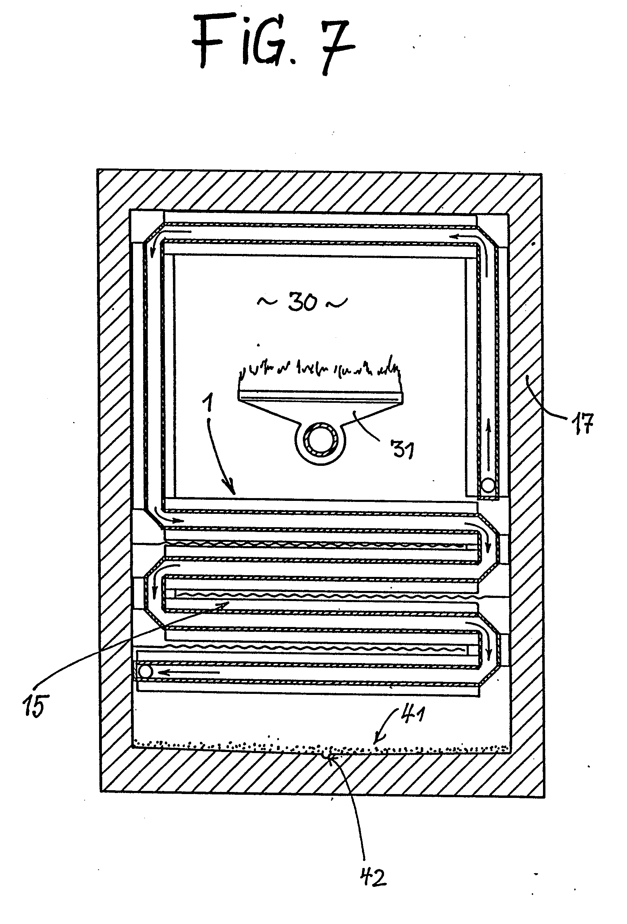

Ebenfalls günstig für die Abführung des Kondensats ist eine Ausbildung des Heizkessels gemäß Fig. 7, wobei die Brennkammer 30 oberhalb des Mäanderblockes 15 angeordnet ist. Die gezeigte beispielhafte Ausführung ist äußerst unkompliziert und daher sehr preisgünstig herstellbar. Eine solche Ausführungsform kommt insbesondere für Heizkessel mit relativ geringer Heizleistung in Frage.

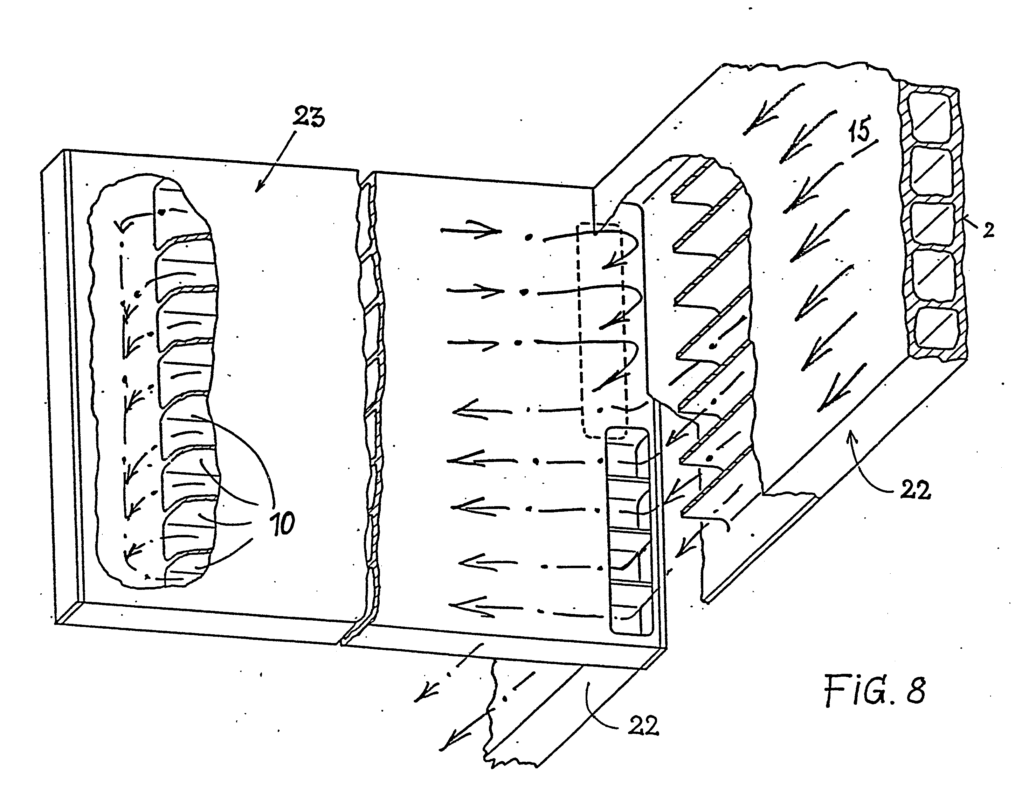

Fig. 8 zeigt eine perspektivische Detaildarstellung von Teilen 22 des mäanderförmigen Blocks 15 des Wärmetauschersystems mit einer die Strömungsrichtung des Rauchgases zwischen zwei von einem doppelten Kniestück (in Fig. 8 nicht gezeigt) ausgehenden Profilstücken 2 umlenkenden, mit Kanälen 10 für ein zu erhitzendes Medium ausgebildeten Wand 23.

In den Figuren 9 bis 22 sind unterschiedliche Ausgestaltungen von Profilstücken 2 dargestellt, aus welchen jeweils ein mäanderförmiger Block 15 eines Heizregisters 1 des Heizkessels nach der Erfindung sich zusammensetzt.

In Fig. 9 und 10 sind aus Aluminium im Strangpreßverfahren einstückig hergestellte Profilstücke 2 gezeigt, die speziell für einen Querstromkessel, beispielsweise entsprechend der in Fig. 3 gezeigten Ausführung bestimmt sind. Hierbei fließt das Rauchgas, welches vom Brenner 31 erzeugt wurde, quer zu den Elementen 2 und quer zu den darauf angebrachten Rippen 11. Diese sorgen einerseits für eine hervorragende Wärmeabfuhr zu dem in den Elementen beziehungsweise Profilstücken 2 geführten Wasserströmen und andererseits für eine so gute Durchwirbelung der Rauchgase, daß diese bis zum Austritt aus dem Heizregister 1 auf Temperaturen unterhalb des Kondensationspunktes abgekühlt werden können. Dabei sind durch innere Stege 7 zwischen den Längswänden 6, 6' Kanäle 10 beziehungsweise 10' mit unterschiedlichen Querschnitten ausgebildet. Diese können für unterschiedliche Wärmeträgermedien vorgesehen sein. Beispielsweise dienen in Fig. 9 die Kanäle 10 der Erwärmung von Brauchwasser, während die Kanäle 10' von Heizungswasser durchflossen sind. In Fig. 10 können beispielsweise die Kanäle 10 für Heizungswasser und die Kanäle 10' für Heißluft vorgesehen sein. Diese Kanäle 10' können zur Verbesserung des Wärmeüberganges an die Heizluft mit inneren Rippen 11' ausgebildet sein. Die Längswände 6, 6' sind einstückig durch Seitenwände 8, 8' verschlossen und miteinander verbunden.

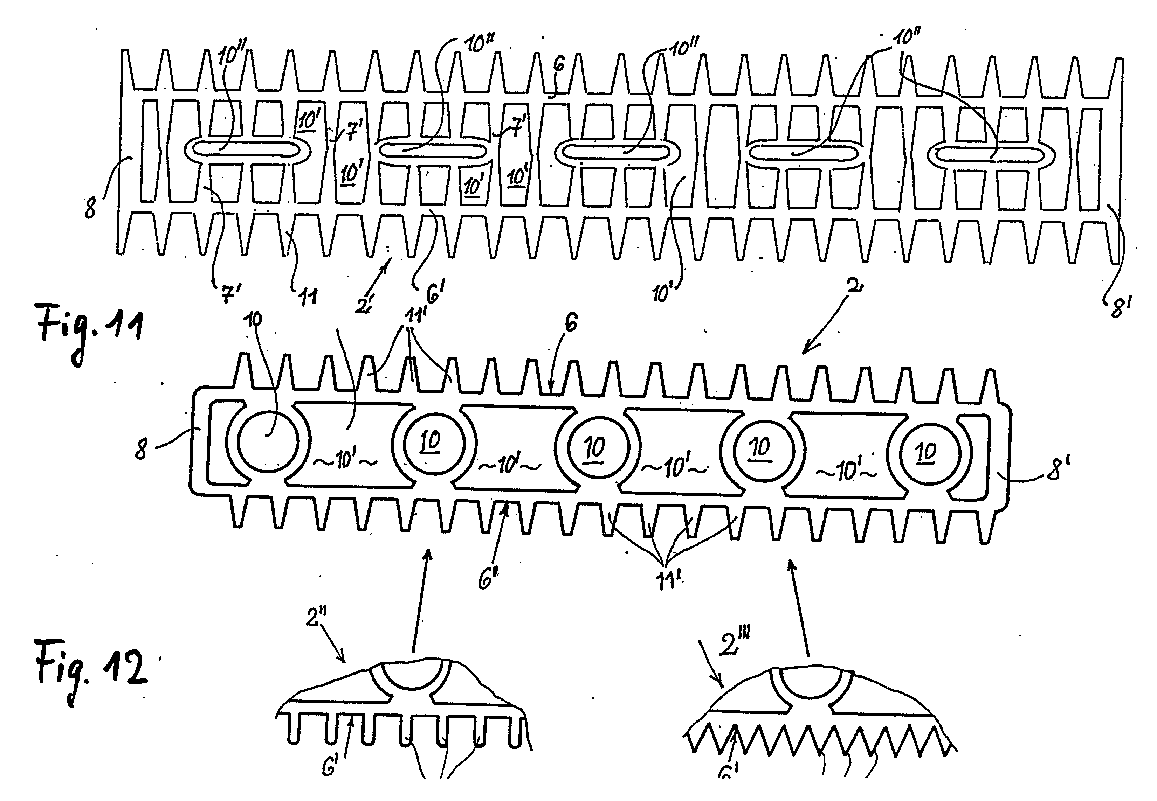

Fig. 11 zeigt ein Profilstück 2' in Sonderausführung für Gaserhitzung. Durch rippenartige innere Stege 7' sind dabei Kanäle 10' gebildet, die eine im Verhältnis zum Querschnitt relativ große Wandfläche aufweisen und sich daher für ein zu erhitzendes gasförmiges Medium besonders gut eignen. Im Innern eingebettet sind kleinere Kanäle 10'' in Abständen angeordnet, die beispielsweise zur Erhitzung eines flüssigen Mediums wie Brauchwasser dienen können.

Aufgrund der hohen Biegesteifigkeit des Profils gemäß Fig. 11 eignet sich dieses zur Verarbeitung mittels auf Gehrung geschnittenen und beispielsweise durch Preßschweißung zusammengesetzten Kniestücken der Umlenkungen 4, wie sie beispielsweise der Heizkessel in Fig. 1 beziehungsweise die schematische Darstellung des Heizregisters in Fig. 5 mit den Kniestücken 36 zeigt.

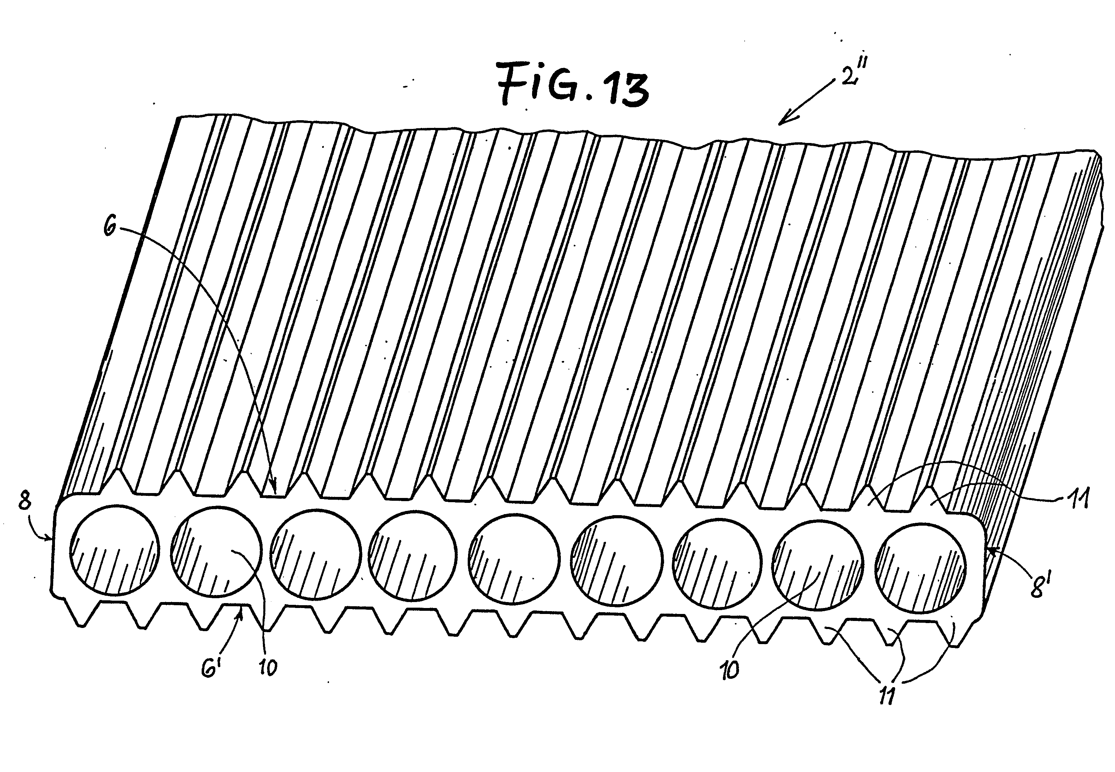

Fig. 12 zeigt eine andere Ausgestaltung mit im Inneren runden Kanälen 10 und dazwischenliegenden Kanalabschnitten 10' für unterschiedliche Heizmedien. Die Darstellung zeigt unterschiedliche Ausgestaltungen von Rippen 11' beziehungsweise 11'', 11'''. Dabei sind die Rippen 11' als flache Stege ausgebildet, deren Querschnittsform trapezförmig verjüngt ausgebildet ist, während die Rippen 11'' rechteckig mit abgerundeten Kanten und die Rippen 11''' dreiecksförmig nach Art von Sägezähnen ausgebildet sind.

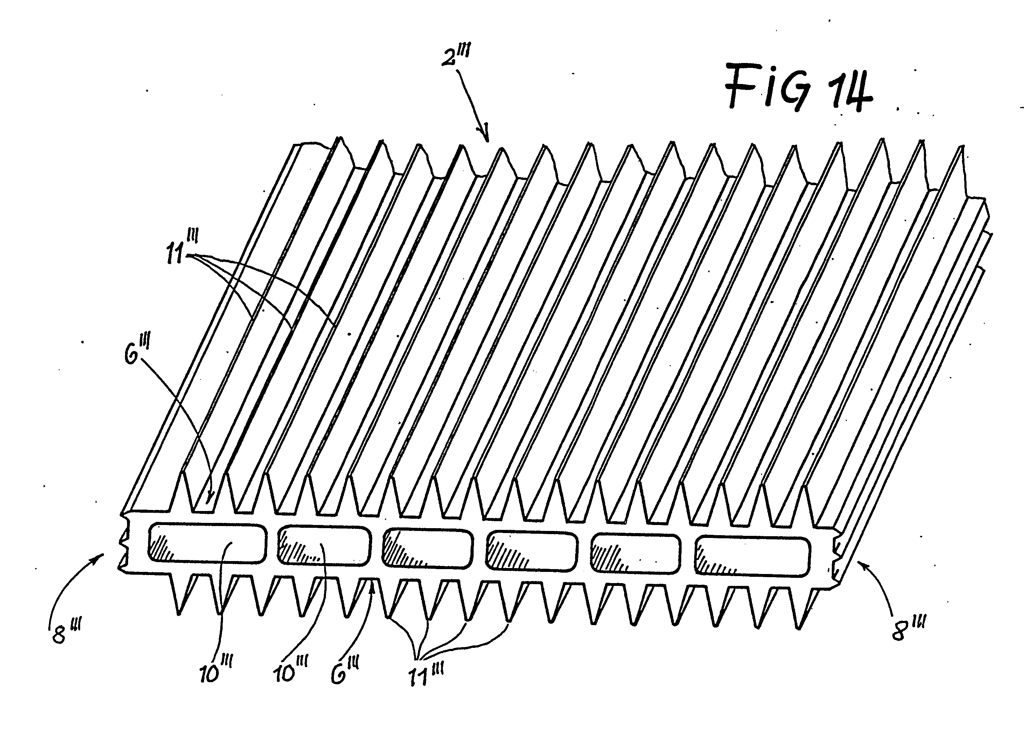

Das Profilstück 2'' in Fig. 13 ist mit runden Kanälen 10 und mit relativ stumpfen Rippen 11 ausgebildet. Dieses Profil eignet sich in für den Fachmann überraschender Weise nach örtlicher Wegnahme der Rippen 11 zur Herstellung von 90-grädigen Biegungen ohne Materialeinschnitt. Auf diese Weise können unter Vermeidung von Schweiß-, Löt- oder anderweitigen Verbindungsverfahren sehr preisgünstig und problemlos einstückige Umlenkungen bis 90 ° hergestellt werden.

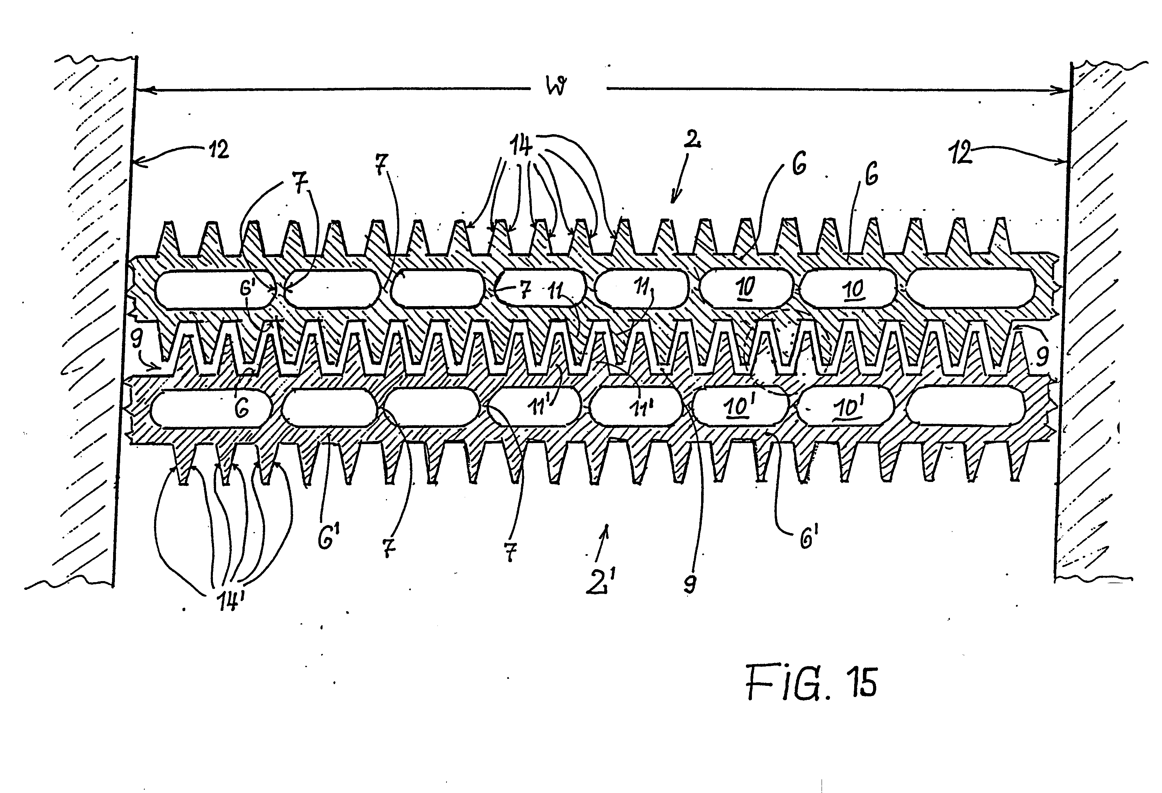

Eine für alle Arten der Verarbeitung bestens geeignetes sehr flaches und die Unterbringung großer Wärmeaustauschflächen auf kleinstem Rauch ermöglichendes Profilstück 2''' zeigt Fig. 14. Infolge der flachen und im Verhältnis dazu breiten Ausführung der Kanäle 10'''läßt sich auch dieses Profilstück bei entsprechender Vorbereitung durch Wegnahme von Rippen 11'''im Biegebereich problemlos biegen. Andererseits ist es aber auch sehr vorteilhaft mit Gehrungsschnitten und vorbeschriebenen Verbindungsverfahren beispielsweise durch Preßschweißen, Löten oder Elektrodenstrahlschweißen sicher und zuverlässig verarbeitbar.

Fig. 5 zeigt zwei einander gegenseitig zugeordnete Einzelelemente 2 beziehungsweise 2'. Hierbei ist mit großem Vorteil die gegenseitige Anordnung so getroffen, daß jeweils 2 einander gegenüberliegende, einen Rauchgaskanal 9 begrenzende Wärmeaustauscherelemente 2 beziehungsweise 2' derart räumlich einander zugeordnet sind, daß jeweils eine im Querschnitt zahnförmige Rippe 11 des einen Wärmetauscherelementes 2 in den freien Zwischenraum zwischen jeweils zwei Rippen 11' des anderen Wärmetauscherelementes 2' hineinragt, derart, daß die Rippen mit ihren einander gegenüberliegenden Flächen 14 beziehungsweise 14' einen im Querschnitt zick-zack-
förmigen Rauchgaszug 9 umgrenzend bilden. Hierdurch
wird ein Optimum an Wärmeübergang vom Rauchgas über
die Rippen 11, 11' sowie die Wände 6, 6' in das
in den Kanälen 10, 10' zirkulierende, zu erhitzende
Medium erzielt.

Gemäß den Figuren 16, 17 und 18 besteht ein Mäanderbogen aus stranggepreßten Profilstücken, wobei das
obere Profil mit 2    und das untere Profil mit 2'
bezeichnet ist. Ein Profilabschnitt 2''  , welcher
nur einseitig Rippen 11'' trägt, wird an die innenliegenden Längswände 29 der Profilstücke 2 und 2'
angeschweißt. Die verbleibende Öffnung wird mit
einem übereck liegenden Profilabschnitt 47 beziehungsweise einem rippenlosen Blechstreifen 47' abgedeckt,
dessen Längsränder 48, 48' mit den freien Profilkanten 49, 49' verschweißt sind. Die Profilstücke
können mit außenliegenden Schweißnähten eingeschweißt
werden, so daß alle Schweißnähte von außen anbringbar
sind. Die Schweißverbindung erfolgt dabei zwischen
den Längswänden 29, 29' der Profilstücke 2 und 2'
mit den Längskanten der Profilstücke 2''.

Dabei ist weiter vorgesehen, daß die inneren Längswände 29, 29' der den Mäander bildenden Profilstücke
2, 2'' beziehungsweise 2'', 2' mit einer Längswand
29'' eines nur auf einer Seite Rippen 11'' tragenden Profilabschnittes 2'' verschweißt sind und die
freibleibenden außenliegenden Wände 49, 49'' von
weiteren Profilstücken 47 überbrückt werden, deren
Längskanten 48 mit den äußeren Wänden 49, 49' des
oberen oder unteren Profils 2, 2' einerseits und der
äußeren Wand 49'' des querliegenden Profilabschnitts
2''  andererseits verschweißt sind.
(siehe Fig. 16 bis 21)

Die Anordnung dieser rechteckigen oder den Mäander bildenden Profilstücke 2, 2' beziehungsweise 2'' sowie die Zuordnung der miteinander zu verschweißenden Kanten sind aus den Figuren 16 bis 18 deutlich zu erkennen. In Fig. 21 ist eine demgegenüber noch vereinfachte Ausführung dargestellt, wobei die beiden Profilabschnitte 2 beziehungsweise 2' im rechten Winkel zueinander angeordnet und an den jeweiligen inneren Längswänden 29, 29' verschweißt und in der offenen Beuge mit einem rippenlosen Blechstreifen 47' abgedeckt sind, dessen Kanten 49'' mit den äußeren Wänden 49, 49' des Blechstreifens 47' verschweißt sind .

Ein im Querschnitt aus Mäanderbögen gemäß den Figuren 16 bis 21 und insbesondere in einer Anordnung entsprechend der Fig. 15 hergestelltes Heizregister 1 zeigt die Fig. 22. Das Heizregister besteht dabei aus einzelnen übereinander in Form von Mäanderschleifen angeordneten einzelnen geraden Profilabschnitten 2, 2'. Diese sind flach mit inneren ovalen Kanälen 10, 10' für ein zu erwärmendes Medium sowie mit äußeren Rippen 11, 11' ausgebildet, welche mit ihren Seitenwänden 14, 14' die dazwischenliegenden Rauchgaszüge 9 begrenzend umschließen. Aus dieser Darstellung geht die außerordentlich gedrungene und wärmewirtschaftlich intensive Ausgestaltung des Heizregisters 1 hervor, das in sich einen mäanderförmigen Block 15 bildet.

Erfindungswesentlich und für die Herstellung außerordentlich wirtschaftlich sind die Strangpreßprofile 2, 2' mit einer Breitenerstreckung B ausgebildet, welche in etwa der lichten Weite W des Wassererhitzers 1 beziehungsweise 15 zwischen zwei parallelen Wänden 12

0166437

entspricht. Weiter sind jeweils zwei einander gegenüberliegende, einen Strömungskanal 9 für rauchgasbegrenzende Wärmetauscherelemente 2, 2' derart räumlich einander zugeordnet, daß jeweils eine im Querschnitt zahnförmige Rippe des einen Wärmetauscherelementes 2 in den freien Zwischenraum zwischen jeweils zwei Rippen 11' des anderen Wärmetauscherelementes 2' hineinragt, derart, daß die Rippen 11, 11' mit ihren einander gegenüberliegenden wärmeaustauschenden Flächen 14, 14' einen im Querschnitt zick-zack-förmigen Strömungskanal 9 für Rauchgas umgrenzend bilden. Im gezeigten Ausführungsbeispiel ist die Brennkammer (nicht gezeigt) unterhalb des Heizregisters 1 angeordnet. Demzufolge sind in weiterer erfindungswesentlicher Ausgestaltung die Querschnitte der Rauchgaszüge 9 von unten nach oben mit kleiner werdenden Querschnitten ausgebildet. Hierdurch wird eine konstante Durchströmungsgeschwindigkeit aufrechterhalten, wobei das durch Wärmeentzug beziehungsweise Kondensation im Verlauf der Durchströmung durch das Heizregister 1 geringer werdende Rauchgasvolumen entsprechend berücksichtigt wurde. Nach Maßgabe dieser Volumenkontraktion sind auch die Durchtrittsöffnungen 50 zwischen den einzelnen Wärmeaustauscher-Etagen von unten nach oben zu mit kleiner werdenden Querschnitten ausgebildet. Der Vorlauf 32 liegt im oberen Bereich des Heizregisters 1, während der Heißwasseraustritt 33 im unteren Bereich des Mäanderblockes 15 vorgesehen ist. Entsprechend ist der Abzug 39 für Abgas im oberen Bereich des Heizregisters 1 angeordnet.

Eine Draufsicht auf einen Krümmer 40 beziehungsweise 41, wie er beispielsweise zur Herstellung des Heizregisters 1 im Heizkessel gemäß Fig. 3 verwendet ist, zeigt die Fig. 23. Dabei ist der Krümmer in seinem Anschlußbereich und entsprechend das anzuschließende Profilstück 2, 2' so ausgebildet, daß eine Verbindung zwischen Profilstück und Krümmer durch Preßschweißen mit oder ohne Zusatzstoff, gegebenenfalls aber auch durch Löten oder reines Schweißen oder Kleben erfolgen kann. Zweckmäßig für die Ausführung einer derartigen Verbindung sind sowohl Krümmer 40 als auch die damit zu verbindenden Profilstücke 2, 2' aus gleichem Material, nämlich aus Aluminium beziehungsweise Reinstaluminium hergestellt. Daher kann beispielsweise das Schweißen bei verhältnismäßig niedrigen Temperaturen ebenso wie das Löten unter Schutzgas problemlos durchgeführt werden.

Ein Krümmer weist ebenfalls Rippen 11 auf, die ebenfalls in besonderem Maße an der Wärmeübertragung teilnehmen. Der Innenraum der Profilstücke 2, 2' sowie dazu passender Krümmer 40, 40' weist gleichgestaltete Kanäle 10, 10' auf, gegebenenfalls in einer bereits beschriebenen Anordnung derart, daß nicht nur Wasser sondern gegebenenfalls auch Brauchwasser oder Luft erhitzt werden kann.

Um die Profilstücke 2, 2' mit Krümmern 40, 40' zuverlässig zu verbinden, können die sich berührenden Flächen 51 vorteilhaft beispielsweise mit konusartigen Einzügen oder ähnlichen eine Zentrierung erleichternden Einrastelementen wie Vorsprüngen 52 ausgebildet sein, gegebenenfalls kann auch zur exakten Positionierung von Profilstück 2 und Krümmer 40 eine Anordnung von Stiften und diese aufnehmenden Bohrungen oder von Nut und Feder Gebrauch gemacht sein.
Eine sehr zweckmäßige Ausgestaltung eines Krümmers ist aus der Zusammenschau der Figuren 23 und 24 zu erkennen, wobei Fig. 24 die element- beziehungsweise profilstückseitige Ansicht eines Krümmers 40 zeigt.
Daraus ist die Anordnung und Gestaltung einerseits
der Kanäle 10, 10', andererseits der Rippen 11 sowie
der Vorsprünge 52 erkennbar.

Fig. 25 zeigt eine Ausführung einer rechtwinkligen
Umlenkung eines Strangpreßprofiles 2 in geschweißter
Ausführung. Von den die rechtwinklige Umlenkung 4 bildenden beiden Schenkeln 2, 2' sind jeweils die äußeren
Wandteile 6, 6' mit einem Trennschnitt 53 durchtrennt.
Dieser Trennschnitt 53 durchtrennt auch den Kanal 10
in nunmehr zwei rechtwinklige Kanalteile 10 und 10'.
An der inneren Seite der Biegung sind die Rippen 11
beziehungsweise 11' auf Gehrung 54 ausgeschnitten,
so daß die Schenkel 2, 2' über die unverletzte innere
Wand 6' mit einem relativ kleinen Radius von beispielsweise 10 mm gebogen werden kann, ohne daß hierdurch das Materialgefüge an der Biegestelle nachteilig verändert wird. Sodann werden die infolge der
Biegung aufklaffenden Seitenwände mit eingeschweißten
Eckblechen 27 und die im Biegungsbereich auseinanderklaffenden Bereiche der äußeren Wandteile 6, 6' mit
einem Deckblech 28 mediendicht verschweißt.
Hierdurch ergibt sich infolge der Biegsamkeit des zur
Herstellung der Strangpreßprofile 2, 2' verwendeten
Aluminiumwerkstoffes eine vorteilhafte kostengünstige
Herstellung und eine für die Ausbildung des Wärmetauschersystemes 1 beziehungsweise 15 jeweils besonders
vorteilhafte Anordnung. Diese hat weiterhin den Vorzug,
daß die sich insgesamt für eine vollautomatisch ausführbare Folge von Arbeits- beziehungsweise Schweißschritten eignet und daher eine sehr kostengünstige
Möglichkeit zur Herstellung von Mäanderschleifen bietet,
die aus beabstandeten rechtwinkligen Umlenkungen 4
eines endlosen Strangpreßprofiles herstellbar sind.

Schließlich zeigt Fig. 26 eine Ausführung einer rechtwinkligen Umlenkung 4 an einem Strangpreßprofil 2, welche in einstückiger Biegung hergestellt ist, in Seitenansicht. Im Bereich der Biegung 55 sind Teile der äußeren und inneren Rippen 11, 11' weggeschnitten und somit ein zur Biegung vorbereitetes rippenloses Teil 56 freigelegt, welches sich in überraschender Weise infolge der stabilisierenden Struktur der inneren Kanäle 10 in vorzugsweise angewärmtem Zustand ohne nachteilige Deformationen in der gezeigten Weise biegen läßt. Hierdurch ergibt sich eine außerordentlich günstige und insbesondere wirtschaftliche Herstellung für Mäanderschleifen zur Ausbildung eines aus diesen aufgebauten Mäanderblockes 15 beispielsweise gemäß Darstellung in Fig. 22.

Weil ein Heizkessel mit Heizregistern nach der Erfindung in der Ausgestaltung eines Mäanderblockes aus einzelnen geraden Profilstücken eines Aluminium-Strangpreßprofiles eine gedrungene und wärmewirtschaftlich mit hervorragendem Wirkungsgrad arbeitende Konstruktion mit maximalen Wärmeaustauschflächen auf minimalem umbauten Raum ergibt, weil dieser Heizkessel weiterhin kostengünstig herstellbar ist und infolge des erfindungsgemäß verwendeten Reinstaluminiums von sauren Kondensaten nicht angegriffen wird, und weil sich die erfindungsgemäße Bauart zur Herstellung für vollmechanisierte, größtenteils automatisierbare Arbeitsschritte eignet, kann somit hinsichtlich der Erfindung von einer idealen Lösung der eingangs gestellten Aufgabe gesprochen werden.

0166437

Patentansprüche

1. Heizkessel, insbesondere Kondensationsheizkessel für eine Sammelheizungsanlage, mit einer Brennkammer mit wenigstens einem daran anschließenden Rauchgaszug und einem diesen als Heizregister umgebenden Mantel eines Wärmeabführmediums, die durch eine Wärmeaustauschwand voneinander getrennt sind, wobei die in direkter Verbindung zum Rauchgaszug als Energiespender und/oder Energieträger angeordnet ist und jeweils das Wärmeabführmedium zwischen sich führende Wände des Heizregisters ein einstückiges Profil bilden, d a d u r c h   g e k e n n z e i c h n e t, daß das Heizregister (1) aus einzelnen geraden Profilstücken (2) eines Profilstranges gebildet wird, die an ihren Enden (3) durch Umlenkungen (4) verbunden miteinander im wesentlichen die Form eines Mäanders bildend angeordnet sind.

2. Heizkessel nach Anspruch 1, dadurch gekennzeichnet, daß das Heizregister (1), welches das zu erhitzende Medium führt, aus mittleren flachen Profilstücken (2, 2', 2'') besteht, die an ihren Enden (3) mit angesetzten Krümmern (40, 40') verbunden sind.

3. Heizkessel nach Anspruch 1, dadurch gekennzeichnet, daß das Heizregister (1), welches das zu erhitzende Medium führt, aus mittleren flachen Profilstücken (2, 2', 2'') besteht, die an ihren Enden (3) mit einfachen oder doppelten Kniestücken (36) verbunden sind.

4. Heizkessel nach Anspruch 1, dadurch gekennzeichnet, daß einzelne gerade Profilstücke (2, 2', 2'') an ihren Enden (3) durch angebogene Krümmer beziehungsweise Biegestellen (19) einstückig miteinander verbunden sind.

- A 2 -

5. Heizkessel nach Anspruch 1 bis 4, dadurch gekennzeichnet, daß das Profil (2, 2', 2'') innen eine Anzahl von mit den Außenwänden (6, 6') einstückigen längsverlaufenden Kanälen (10, 10') und außen gleichgerichtete längsverlaufende Rippen (11, 11') aufweist.

6. Heizkessel nach Anspruch 1 bis 5, dadurch gekennzeichnet, daß das Profil (2, 2', 2'') aus stranggepreßtem Aluminium hergestellt ist.

7. Heizkessel nach Anspruch 1, dadurch gekennzeichnet, daß das Profil (2, 2', 2'') ein Strangpreßprofil aus Reinstaluminium ist.

8. Heizkessel nach einem der Ansprüche 1 bis 7, dadurch gekennzeichnet, daß die Leichtmetall-Strangpreßprofile (2, 2', 2'') als flächenhafte Elemente ausgebildet sind, deren Dicke einschließlich der rippenförmigen Wärmeübertragungsflächen (11, 11') wesentlich kleiner ist, als ihre Erstreckung in Länge und Breite.

9. Heizkessel nach einem der Ansprüche 1 bis 8, dadurch gekennzeichnet, daß die Strangpreßprofile (2, 2', 2'') eine Breitenerstreckung B aufweisen, welche in etwa der lichten Weite B des Wassererhitzers 1 zwischen zwei parallelen Wänden 12 entspricht.

10. Heizkessel nach einem der Ansprüche 1 bis 9, dadurch gekennzeichnet, daß die in einem Profilstück (2, 2', 2'') angeordneten Kanäle (10, 10'), die das zu erhitzende Medium führen, einen kreisförmigen oder elliptoidischen Querschnitt aufweisen.

- A 3 -

11. Heizkessel nach einem der Ansprüche 1 bis 10, dadurch gekennzeichnet, daß die Kanäle (10, 10') eine eckige, vorzugsweise hexagonale Querschnittsform aufweisen.

12. Heizkessel nach einem der Ansprüche 1 bis 11, dadurch gekennzeichnet, daß die Rippen (11'') als flache Stege ausgebildet sind, deren Querschnittsform rechteckig mit abgerundeten Kanten oder dreiecksförmig oder trapezförmig verjüngt ausgebildet ist.

13. Heizkessel nach einem der Ansprüche 1 bis 12, dadurch gekennzeichnet, daß Rippen (11') im Querschnitt die Kontur einer stumpfen Pyramide mit einer Höhe von etwa 8 bis 10 mm, einer Basisbreite von etwa 5 mm und einer oberen Querfläche von etwa 1 mm aufweisen.

14. Heizkessel nach einem der Ansprüche 1 bis 13, dadurch gekennzeichnet, daß die auf einer Außenfläche (6, 6') eines Wärmetauscherelementes (2, 2') angeordneten Rippen (11, 11'), im Querschnitt betrachtet, in Form und Anordnung in etwa Zähnen einer Zahnstange ähneln.

15. Heizkessel nach einem der Ansprüche 1 bis 14, dadurch gekennzeichnet, daß jeweils zwei einander gegenüberliegende, einen Strömungskanal (9) für Rauchgas begrenzende Wärmetauscherelemente (2, 2') einander derart räumlich zugeordnet sind, daß jeweils eine im Querschnitt zahnförmige Rippe (11) des einen Wärmetauscherelementes (2) in den freien Zwischenraum zwischen jeweils zwei Rippen (11') des anderen Wärmetauscherelementes (2') hineinragt, derart, daß die Rippen (11, 11') der einander gegenüberliegenden

- A 4 -

Flächen (14, 14') einen im Querschnitt zick-zack-förmigen Strömungskanal (9) für Rauchgas umgrenzend bilden.

16. Heizkessel nach einem der Ansprüche 1 bis 15, dadurch gekennzeichnet, daß die Krümmer (40, 40') ebenfalls Rippen (11) aufweisen, die mit den Rippen der Profilstücke (2, 2', 2'') fluchten.

17. Heizkessel nach einem der Ansprüche 1 bis 16, dadurch gekennzeichnet, daß die Rippen (11) der Krümmer (40, 40') und der Profilstücke (2, 2', 2'') an ihren Stoßstellen gleiche Höhe und Form aufweisen.

18. Heizkessel nach einem der Ansprüche 1 bis 17, dadurch gekennzeichnet, daß Profilstücke (2, 2', 2'') und Krümmer (40, 40') gleiche Durchgangsquerschnitte aufweisen.

19. Heizkessel nach einem der Ansprüche 1 bis 18, dadurch gekennzeichnet, daß die Seitenwände der Brennkammer (30) und des Mäanderraumes einschließlich Decke und Boden von in der Form den Profilstücken (2, 2', 2'') und Krümmern (40, 40') entsprechenden Profilstücken und Krümmern gebildet werden, die einen Profilstrang ausbilden, welcher in den des Mäanders übergeht.

20. Heizkessel nach einem der Ansprüche 1 bis 19, dadurch gekennzeichnet, daß jeweils zwei parallele Profilstücke (2, 2') mit jeweils einem Kniestück (36) in Form einer zwei beabstandete rechte Winkel bildenden Umlenkung (4) von etwa 180 $^{\circ}$ gegenüber einer der Wände (12) des Heizkessels ausgebildet ist.

- A 5 -

21. Heizkessel nach einem der Ansprüche 1 bis 20, dadurch gekennzeichnet, daß zur Erzeugung eines parallel gerichteten Gegenstromes in die Mäanderschlingen Leitbleche (13) eingesetzt sind und Seitenwände (12) zur Verhinderung eines Querstromes vorhanden sind.

22. Heizkessel nach Anspruch 21, dadurch gekennzeichnet, daß die Leitbleche (13) genoppt sind oder Stufen oder Sicken aufweisen oder sonst wie profiliert sind.

23. Heizkessel nach einem der Ansprüche 1 bis 22, dadurch gekennzeichnet, daß sich der mäanderförmig geformte Teil des Profilstranges in einem vorzugsweise wasserführenden Mantel (5) fortsetzt, welcher den mäanderförmig geformten Teil (15) und die Brennkammer (30) umschließt.

24. Heizkessel nach einem der Ansprüche 1 bis 23, dadurch gekennzeichnet, daß die Brennkammer (30) von Leichtmetall-Strangpreßprofilen (2, 2', 2'') gebildete, wasserführende Wände (12) aufweist, wobei fallweise auch eine Vorderwand und/oder eine Rückwand mit wasserdurchströmbaren Strangpreßprofilen ausgebildet sind.

25. Heizkessel nach Anspruch 24, dadurch gekennzeichnet, daß wasserführende Wände (12) der Brennkammer (30) brennkammerseitige Rippen (11) aufweisen.

26. Heizkessel nach einem der Ansprüche 1 bis 25, dadurch gekennzeichnet, daß der den mäanderförmigen Block (15) bildende Teil des Profilstranges mit dem Mantel (5) über Klötze (26) verbunden ist.

- A 6 -

27. Heizkessel nach einem der Ansprüche 1 bis 26, dadurch gekennzeichnet, daß das Rauchgas in wenigstens zwei getrennten Teilströmen (9, 9') entlang getrennter mäanderförmig angeordneter Profil-Teilstränge (24, 24', 25) abgezogen wird und auf verschiedenen Seiten der Brennkammer (30) an jedem das Wärmeabführmedium führenden Profil-Teilstrang (24, 24', 25) entlangströmt.

28. Heizkessel nach einem oder mehreren der Ansprüche 1 bis 27, dadurch gekennzeichnet, daß ein Kniestück (36) beziehungsweise eine rechtwinklige Umlenkung (4) mit durchtrennter äußerer Wand (6) und durchtrennten Kanälen (10) und rechtwinklig gebogener innerer Wand (6') ausgebildet ist, wobei die infolge der Biegung aufklaffenden Seitenwände (8, 8') mit eingeschweißten Eckblechen (27) und die im Biegungsbereich auseinanderklaffenden Bereiche der äußeren Wand (6) mit einem Deckblech (28) mediendicht verschweißt sind.

29. Heizkessel nach einem oder mehreren der Ansprüche 1 bis 28, dadurch gekennzeichnet, daß zwischen zwei von einem doppelten Kniestück (36) ausgehenden Profilstücken (2, 2') eine die Strömungsrichtung des Rauchgases umlenkende Wand (23) angeordnet ist.

30. Heizkessel nach Anspruch 29, dadurch gekennzeichnet, daß die Wand (23) von Wasser durchströmbar mit Kanälen (10) ausgebildet ist.

31. Heizkessel nach einem der Ansprüche 1 bis 30, dadurch gekennzeichnet, daß die Brennkammer (30) in dessen unterem Bereich (45) und das Wärmetauschersystem (1, 15) darüberliegend angeordnet ist.

- A 7 -

32. Heizkessel nach einem der Ansprüche 1 bis 31, dadurch gekennzeichnet, daß die Brennkammer (30) in dessen oberem Bereich (46) und das Wärmetauschersystem (1, 15) darunterliegend angeordnet ist.

33. Heizkessel nach einem der Ansprüche 1 bis 32, dadurch gekennzeichnet, daß seitliche Begrenzungswände (12) des Wärmetauschersystems (1, 15) von Wasser durchströmbar mit Kanälen (11) ausgebildet sind.

34. Heizkessel nach einem der Ansprüche 1 bis 33, dadurch gekennzeichnet, daß vordere und hintere Begrenzungswände des Wärmetauschersystems (1, 15) von Wasser durchströmbar mit Kanälen (11) ausgebildet sind.

35. Heizkessel nach einem der Ansprüche 1 bis 34, dadurch gekennzeichnet, daß das Wärmetauschersystem (1, 15) mit jeweils zwei getrennten, von Wärmetauscherelementen (2) gebildeten Wärmetauschersträngen (24, 25) ausgebildet ist, wobei jeder Strang (24, 25) mit im Gegenstrom von den wärmeaustauschenden Medien durchströmbar in Mäanderform angeordneten Rauchgaszügen (9, 9') beziehungsweise Wasserkanälen (10, 10') ausgebildet ist.

36. Heizkessel nach einem der Ansprüche 1 bis 35, wobei das Heizregister aus verschieden langen gleichartigen Profilstücken zusammengesetzt ist, dadurch gekennzeichnet, daß die Profilstücke (2, 2', 2'') jeweils an ihren Enden (3) auf Gehrung geschnitten und an den Schnittstellen miteinander verbunden sind.

37. Heizkessel nach Anspruch 36, dadurch gekennzeichnet, daß die Verbindung durch Elektrodenstrahlschweißen erfolgt ist.

- A 8 -

38. Heizkessel nach Anspruch 36, dadurch gekennzeichnet, daß die Verbindung durch Schweißen mittels einer abschmelzenden Elektrode erfolgt ist.

39. Heizkessel nach einem der Ansprüche 1 bis 38, dadurch gekennzeichnet, daß Profilstücke (2, 2', 2'') und Krümmer (40, 40') beziehungsweise Kniestücke (36) miteinander durch Preßschweißen beziehungsweise durch Preßschweißen mit Zusatzmaterial verbunden sind.

40. Heizkessel nach einem der Ansprüche 1 bis 39, dadurch gekennzeichnet, daß zur Bildung rechteckiger Profilverbindungen die inneren Längswände (29, 29') aneinander stoßender Profile (2, 2'') beziehungsweise (2'', 2') miteinander verschweißt und die verbleibende Öffnung mit einem übereck liegenden Profilabschnitt (47) beziehungsweise einem rippenlosen Blechstreifen (47') abgedeckt ist, dessen Längsränder (48, 48') mit den freien Profilkanten (49, 49') verschweißt sind.

41. Heizkessel nach einem der Ansprüche 1 bis 40, dadurch gekennzeichnet, daß die inneren Längswände (29, 29') der den Mäander bildenden Profilstücke (2, 2'') beziehungsweise (2'', 2') mit einer Längswand (29'') eines nur auf einer Seite Rippen (11'') tragenden Profilabschnittes (2'') verschweißt sind und die freibleibenden außenliegenden Wände (49, 49'') von weiteren Profilstücken (47) beziehungsweise rippenlosen Blechstreifen (47') überbrückt werden, deren Längskanten (48) mit den äußeren Wänden (49, 49') des oberen oder unteren Profils (2, 2') einerseits und der äußeren Wand (49'') des quer liegenden Profilabschnittes (2'') andererseits verschweißt sind.

- A 9 -

0166437

42. Heizkessel nach Anspruch 41, dadurch gekennzeichnet, daß das Profilstück (2'') äußere Rippen (11'') aufweist und vorzugsweise ein Profilabschnitt des Hauptprofils (2) ist.

43. Heizkessel nach einem der Ansprüche 1 bis 42, dadurch gekennzeichnet, daß der Mantel (5) im oberen Bereich der Brennkammer (30) innen eine Abdeckung (16) aus hochhitzebeständigem Material aufweist, wobei dieses vorzugsweise eine Nickel-Molybdän-Chrom-Legierung wie Inconel ist.

44. Heizkessel nach einem der Ansprüche 1 bis 43, dadurch gekennzeichnet, daß die Verbindung von Profilstücken im Bereich der Kniestücke (36) beziehungsweise im Bereich einer rechtwinkligen Umlenkverbindung durch Löten erfolgt ist.

45. Verfahren zur Herstellung des Heizkessels nach Anspruch 44, dadurch gekennzeichnet, daß das Lot in Form einer Folie oder Platte in die zu schließenden Fugen eingelegt wird und die Lötung unter Schutzgas, Inertgas oder Vakuum durchgeführt wird.

46. Verfahren nach Anspruch 45, dadurch gekennzeichnet, daß die Folie oder Platte des Lotes die Form der Schnittfläche der miteinander zu verbindenden Materialstücke aufweist.

47. Verfahren zur Herstellung des Heizkessels nach Anspruch 45, dadurch gekennzeichnet, daß das Lot in flüssiger Form auf die Schnittfläche aufgebracht wird.

1120

0166437

Fig.1

# Fig.2

0166437
Fig. 3

Fig.4

4/20    0166437

FIG 5

5/20   0166437

FIG. 6

6/20     0166437

# FIG. 7

FIG. 8

0166437

Fig. 9

Fig. 10

0166437

Fig. 11

Fig. 12

0166437

Fig.13

FIG 14

0166437

FIG. 15

Fig.16

FIG. 17

FIG. 18

Fig. 19a

Fig. 19b

Fig. 20

Fig. 21

FIG. 22

FIG.23

FiG. 24

FIG. 25

FIG. 26